(19) Europäisches Patentamt
European Patent Office
Office européen des brevets

(11) **EP 4 043 708 B1**

(12) **EUROPEAN PATENT SPECIFICATION**

(45) Date of publication and mention
of the grant of the patent:
**18.06.2025 Bulletin 2025/25**

(21) Application number: **20873000.2**

(22) Date of filing: **08.09.2020**

(51) International Patent Classification (IPC):
*F02B 37/18* (2006.01)     *B60W 20/12* (2016.01)
*B60W 20/13* (2016.01)     *B60W 20/16* (2016.01)
*B60K 6/24* (2007.10)     *B60K 6/46* (2007.10)
*B60W 10/02* (2006.01)     *B60W 10/04* (2006.01)
*B60W 10/06* (2006.01)     *B60W 10/08* (2006.01)
*B60W 10/26* (2006.01)     *F02M 26/06* (2016.01)
*B60W 30/16* (2020.01)     *F02D 41/14* (2006.01)
*F02N 11/04* (2006.01)

(52) Cooperative Patent Classification (CPC):
**F02M 26/06; B60K 6/46; B60W 10/02;**
**B60W 10/04; B60W 10/06; B60W 10/08;**
**B60W 10/26; B60W 20/13; B60W 20/15;**
**B60W 30/16; B60W 50/0097; F02N 11/0837;**
B60W 2540/10; B60W 2540/12; B60W 2554/4042;
(Cont.)

(86) International application number:
**PCT/JP2020/033883**

(87) International publication number:
**WO 2021/065372 (08.04.2021 Gazette 2021/14)**

(54) **VEHICLE CONTROL DEVICE**

FAHRZEUGSTEUERUNGSVORRICHTUNG

DISPOSITIF DE COMMANDE DE VÉHICULE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **04.10.2019 JP 2019183918**

(43) Date of publication of application:
**17.08.2022 Bulletin 2022/33**

(73) Proprietor: **Hitachi Astemo, Ltd.**
**Ibaraki 312-8503 (JP)**

(72) Inventors:
• **OKUDA Yuuki**
  **Hitachinaka-shi, Ibaraki 312-8503 (JP)**
• **OKADA Takashi**
  **Hitachinaka-shi, Ibaraki 312-8503 (JP)**

(74) Representative: **MERH-IP Matias Erny Reichl**
**Hoffmann**
**Patentanwälte PartG mbB**
**Paul-Heyse-Straße 29**
**80336 München (DE)**

(56) References cited:
| | |
|---|---|
| **EP-A2- 0 939 297** | **EP-A2- 3 147 170** |
| **WO-A1-2007/077867** | **WO-A1-2018/155082** |
| **WO-A1-2018/155082** | **JP-A- 2010 143 323** |
| **JP-A- 2011 031 659** | **JP-A- 2011 031 659** |
| **JP-A- 2011 098 604** | **JP-A- 2011 098 604** |
| **JP-A- 2013 199 164** | **JP-A- 2013 199 164** |
| **JP-A- 2014 151 798** | **JP-A- 2018 181 269** |
| **JP-A- 2018 181 269** | **JP-A- S60 163 734** |
| **JP-A- S60 163 734** | **US-A1- 2009 234 552** |

(52) Cooperative Patent Classification (CPC): (Cont.)
B60W 2754/30; B60W 2754/50; F02D 2041/1412;
F02N 11/04; F02N 2200/061; F02N 2200/0801;
F02N 2200/101; F02N 2200/102; F02N 2200/123;
F02N 2200/125; F02N 2300/2006; F02N 2300/306;
Y02T 10/12; Y02T 10/40; Y02T 10/62

**Description**

Technical Field

The present invention relates to a vehicle control device that controls an engine so as to improve fuel efficiency, with driving characteristics of a driver or an automatic driving system in consideration.

Background Art

Conventional techniques related to vehicle control devices are described, for example, in PTL 1 and PTL 2.

In PTL 1, when it is attempted to start an engine while a vehicle is driven by a motor such that the vehicle is driven by the engine, if it is predicted that the engine will be stopped immediately after the engine is started, the starting of the engine is suppressed.

According to PTL 1, by providing an engine start suppression means that interrupts switching from a motor mode to an engine mode when deceleration is predicted on the basis of prediction as to whether or not a driver will perform a deceleration operation in a case where a vehicle cutting in front of an own vehicle is detected, it is possible to reduce a deterioration in fuel efficiency that is caused when the starting and the stopping of the engine is repeated, thereby achieving better acceleration performance.

In addition, PTL 2 relates to an intervehicle distance control device that suppresses a deterioration in drivability caused by changes in speed in the order of deceleration, acceleration, and deceleration, by setting a target intervehicle distance when an accelerator is in an off state to avoid a continuous decrease in intervehicle distance because an own vehicle speed is higher than a preceding vehicle speed even after the accelerator is brought into the off state, in a case where the intervehicle distance decreases by operating an accelerator while an own vehicle is controlled to follow a preceding vehicle.

According to PTL 2, the intervehicle distance control device includes: at least one operation detection means of an acceleration operation detection means detecting a driver's acceleration operation and a deceleration operation detection means detecting a driver's deceleration operation; an intervehicle distance acquisition means acquiring an intervehicle distance between an own vehicle and a preceding vehicle; a target intervehicle distance change means changing a target intervehicle distance based on the intervehicle distance acquired by the intervehicle distance acquisition means according to the driver's acceleration operation or deceleration operation detected by the operation detection means; and a relative speed acquisition means acquiring a relative speed between the own vehicle and the preceding vehicle, wherein the target intervehicle distance change means changes the target intervehicle distance based on the intervehicle distance acquired by the intervehicle distance acquisition means when the relative speed between the own vehicle and the preceding vehicle acquired by the relative speed acquisition means after completion of the acceleration operation is detected by the acceleration operation detection means or after completion of the deceleration operation is detected by the deceleration operation detection means becomes zero. By changing the target intervehicle distance based on an actual intervehicle distance at the time of satisfying the condition that the relative speed between the own vehicle and the preceding vehicle after the completion of the acceleration or deceleration operation is zero (that is, a speed of the own vehicle is the same as that of the preceding vehicle), it is possible to prevent a deterioration in drivability caused by extra acceleration or deceleration, such that the driver does not feel uncomfortable.

PTL 3 discloses an inter-vehicle distance controller controlling a vehicle such that an inter-vehicle distance to a preceding vehicle becomes a target inter-vehicle distance including: at least one Operation detection means of an acceleration operation detection means detecting the acceleration operation of the driver and a deceleration operation detection means detecting the deceleration operation of the driver; an inter-vehicle distance acquisition means acquiring the inter-vehicle distance between a vehicle and the preceding vehicle; a target inter-vehicle distance change means changing the target inter-vehicle distance based on the inter-vehicle distance according to the acceleration operation or the deceleration operation of the driver; and a relative speed acquisition means acquiring a relative speed between the vehicle and the preceding vehicle.

PTL 4 discloses a vehicle position information displaying apparatus and method in which position information of a preceding vehicle is displayed in a manner superimposed on the form of a road under running of a user's vehicle generated from map information.

PTL 5 discloses a vehicle travelling control device that detects a following-up-objective-vehicle traveling in front of an own vehicle VA using a front looking radar device, and detects a predicted cut-in vehicle which is predicted to cut in between the own can and the following-up-objective-vehicle using the front looking radar device and/or frontside looking radar devices.

Citation List

Patent Literature

PTL 1: JP 2018-118690 A
PTL 2: JP 2010-143323 A
PTL 3: JP 2010 143323 A
PTL 4: EP 0 939 297 A2
PTL 5: EP 3 147 170 A2

Summary of Invention

Technical Problem

However, in PTL 1, the opportunity to improve fuel efficiency is limited to the detection of the cut-in vehicle, and there is room for improvement in expanding opportunities to obtain the effect. In PTL 2, although it is attempted to obtain driver's characteristics at a timing of an accelerator pedal returning operation or a brake pedal returning operation, the information is not available in a state where the driver continues to operate the accelerator or the brake, that is, in most of time during which driving operations are performed. In addition, from the viewpoint of prediction of driver's behaviors, none of the documents sufficiently considers information that is likely to be different for each driver, such as driver's preferences and habits.

When a driver or an automatic driving system in place of the driver requests the vehicle to accelerate or decelerate, if driver's preferences and habits can be reflected, it is possible to predict a required driving force, braking force, or acceleration related to the acceleration or deceleration with higher accuracy.

As a result, in a vehicle using both a motor and an engine, it is possible to appropriately distribute a driving force, and it is possible to improve accuracies in restricting the output of the battery and determining the start of the engine. Alternatively, in a vehicle using an engine as a main power source, it is possible to expand opportunities to execute fuel-efficient control involving EGR or supercharging, which causes a relatively large response delay, without sacrificing responsiveness.

That is, an object of the present invention is to provide a vehicle control device that controls an engine so as to improve fuel efficiency, with driving characteristics of a driver or an automatic driving system in consideration.

Solution to Problem

A vehicle control device according to the present invention includes: a driving characteristic computation unit that computes driving characteristic parameters of an own vehicle on the basis of an intervehicle distance between a preceding vehicle and the own vehicle; a preceding vehicle state prediction unit that predicts a state of the preceding vehicle after a predetermined amount of time on the basis of the intervehicle distance; and a driving state estimation unit that estimates a driving state of the own vehicle after the predetermined amount of time on the basis of the state of the preceding vehicle after the predetermined amount of time predicted by the preceding vehicle state prediction unit and the driving characteristic parameters of the own vehicle computed by the driving characteristic computation unit. The driving characteristic parameters are calculated using the following formula:

$$y = \theta_0 + \theta_1 \cdot x_1 + \theta_2 \cdot x_2$$

,

in which y is the driving state of the own vehicle, x1 is the intervehicle distance, x2 is a relative speed, and $\theta 0$, $\theta 1$, and $\theta 2$ are driving characteristic parameters of the own vehicle The own vehicle is a vehicle using an engine as a power source and including a clutch capable of cutting off power transmission of the engine even while the vehicle is traveling. The vehicle control device further comprises a driving plan generation unit that generates a driving plan of the own vehicle on the basis of the driving state of the own vehicle after the predetermined amount of time estimated by the driving state estimation unit, and when the driving state of the own vehicle after the predetermined amount of time estimated by the driving state estimation unit is a driving state in which the own vehicle decelerates, the power transmission of the engine via the clutch is cut off to cause the own vehicle to travel by coasting. The engine is stopped when the driving state of the own vehicle after the predetermined amount of time estimated by the driving state estimation unit is a driving state in which the own vehicle further decelerates. The engine is restarted when the driving state of the own vehicle after the predetermined amount of time estimated by the driving state estimation unit is a driving state in which the own vehicle accelerates.

Advantageous Effects of Invention

The vehicle control device according to the present invention is capable of controlling the engine so as to improve fuel efficiency, with driving characteristics of the driver or the automatic driving system in consideration.

Brief Description of Drawings

[FIG. 1] FIG. 1 is a block diagram illustrating a vehicle control device according to a first embodiment.
[FIG. 2] FIG. 2 is a diagram for explaining a function of a preceding vehicle state prediction unit according to the first embodiment.
[FIG. 3] FIG. 3 is a diagram illustrating a flow of computing driving characteristics according to the first embodiment.
[FIG. 4] FIG. 4 is a diagram for explaining a function of a driving state estimation unit according to the first embodiment.
[FIG. 5] FIG. 5 is an example of a map in which an estimated acceleration and a required driving force are set according to the first embodiment.
[FIG. 6A] FIG. 6A is a diagram for explaining an example of an acceleration estimation result according to the first embodiment.
[FIG. 6B] FIG. 6B is a diagram for explaining an example of an acceleration estimation result according to the first embodiment.
[FIG. 6C] FIG. 6C is a diagram for explaining an example of an acceleration estimation result according to the first embodiment.
[FIG. 7] FIG. 7 is a schematic diagram of a hybrid electric vehicle according to a second embodiment.
[FIG. 8] FIG. 8 is a block diagram of a control unit according to the second embodiment.
[FIG. 9] FIG. 9 is a block diagram illustrating a vehicle control device including a driving plan generation unit according to the second embodiment.
[FIG. 10] FIG. 10 is a diagram for explaining a relationship of a margin with a system output and an upper limit of a battery output according to the second embodiment.
[FIG. 11] FIG. 11 is a diagram for explaining a traveling scene of an own vehicle following a preceding vehicle.
[FIG. 12] FIG. 12 is a diagram for explaining a function of a driving planning unit according to the second embodiment.
[FIG. 13] FIG. 13 is a diagram for explaining an example in which a driving plan is changed according to the second embodiment.
[FIG. 14] FIG. 14 is a diagram for explaining an example in which a driving plan is changed according to the second embodiment.
[FIG. 15] FIG. 15 is a diagram for explaining the effect of the invention according to the second embodiment.
[FIG. 16] FIG. 16 is a schematic diagram of a vehicle using an engine as a main driving power source according to third to seventh embodiments.
[FIG. 17] FIG. 17 is a block diagram illustrating a vehicle control device according to the third and fifth to eighth embodiments.
[FIG. 18] FIG. 18 is a schematic diagram illustrating an engine according to third and fourth embodiments.
[FIG. 19] FIG. 19 is an example of a map in which an opened degree of an EGR valve is set with respect to a rotation speed of the engine and a load of the engine according to the third embodiment.
[FIG. 20] FIG. 20 is a block diagram illustrating a vehicle control device according to a ninth embodiment.
[FIG. 21] FIG. 21 is a block diagram illustrating a vehicle control device according to a tenth embodiment.
[FIG. 22] FIG. 22 is a schematic diagram of a vehicle equipped with a communication module according to an eleventh embodiment.

Description of Embodiments

Hereinafter, embodiments of vehicle control devices according to the present invention will be described with reference to the drawings. Note that, in the drawings, the same elements are denoted by the same reference signs, and redundant description thereof will be omitted.

[First Embodiment]

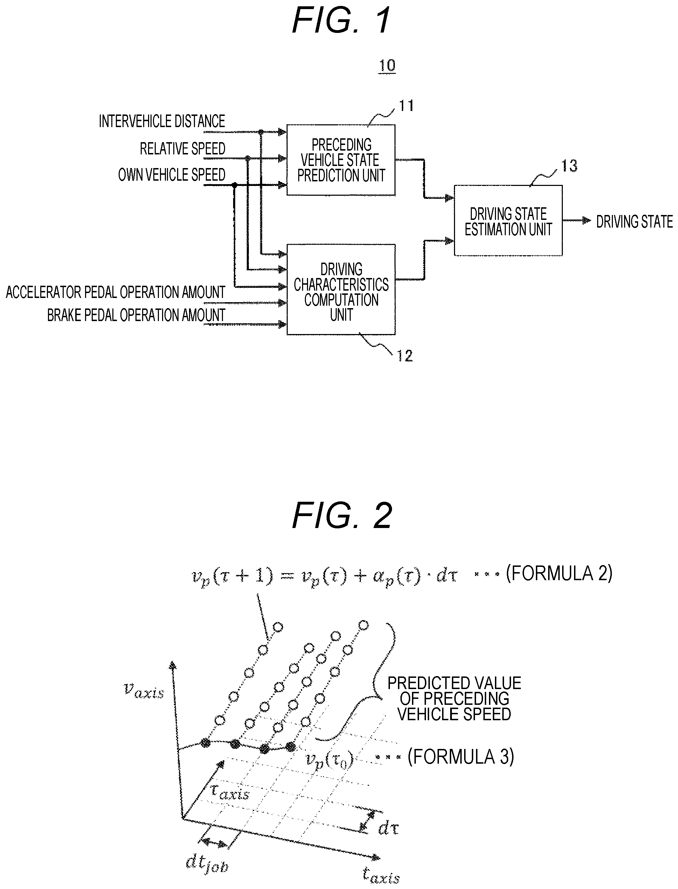

First, a first embodiment of the present invention will be described with reference to FIGS. 1 to 6C.
FIG. 1 is a block diagram illustrating a main part of a vehicle control device according to the first embodiment of the present invention. As illustrated herein, the vehicle control device 10 of the present embodiment includes a preceding vehicle state prediction unit 11 that predicts a future state of a preceding vehicle, a driving characteristic computation unit 12 that extracts driving characteristics of an own vehicle, and a driving state estimation unit 13 that estimates a future driving state of the own vehicle. Specifically, the vehicle control device 10 is a computer including an arithmetic device such as a CPU, a storage device such as a semiconductor memory, and hardware such as a communication device. The arithmetic device executes a program loaded in the storage device to implement a function of each unit. Hereinafter, details of units will be sequentially described while appropriately omitting well-known techniques in the computer field.

<Preceding Vehicle State Prediction Unit 11>

The preceding vehicle state prediction unit 11 predicts a future state of a preceding vehicle on the basis of an intervehicle distance dx between the preceding vehicle and the own vehicle, a relative speed dv between the preceding vehicle and the own vehicle, and an own vehicle speed $v_e$. Here, the future state of the preceding vehicle is information obtained by predicting how the positional relationship (intervehicle distance dx) or the relative speed dv between the preceding vehicle and the own vehicle changes at a future time, for example, after 5 seconds or after 20 seconds. This can be obtained, for example, using the following Formula 1.
[Mathematical formula 1]

$$x_p(\tau + 1) = x_p(\tau) + v_p(\tau) \cdot d\tau + \frac{1}{2} \alpha_p(\tau) \cdot d\tau^2$$

<div align="right">Formula 1</div>

In Formula 1, $\tau$ is a certain time on a virtual time axis $\tau_{axis}$, and $\tau+1$ is a virtual time when a time step $d\tau$ has elapsed from the time $\tau$. The time step $d\tau$ is, for example, 0.1 seconds or 1 second. In addition, $x_p$ is a position of the preceding vehicle, $v_p$ is a preceding vehicle speed, and $\alpha_p$ is a preceding vehicle acceleration. A change in preceding vehicle speed $v_p$ can be obtained from a preceding vehicle speed $v_p(\tau)$ and a preceding vehicle acceleration $\alpha_p(\tau)$ at a certain time $\tau$ as in Formula 2.
[Mathematical formula 2]

$$v_p(\tau + 1) = v_p(\tau) + \alpha_p(\tau) \cdot d\tau$$

<div align="right">Formula 2</div>

An initial value $v_p(\tau_0)$ of the preceding vehicle speed $v_p$ in Formula 1 or 2 can be calculated, for example, as in Formula 3.
[Mathematical formula 3]

$$v_p(\tau_0) = v_{es} + dv_0$$

<div align="right">Formula 3</div>

In Formula 3, $v_{es}$ is an own vehicle speed measured by a speed sensor, and $dv_s$ is a relative speed between the preceding vehicle and the own vehicle at a current time point. The preceding vehicle acceleration $\alpha_p$ in Formula 1 or 2 is obtained as in Formula 4 using a preceding vehicle speed $v_p(\tau_0)$ obtained according to Formula 3 and a preceding vehicle speed $v_{pold}$ obtained before one processing cycle $dt_{job}$ of the vehicle control device 10 according to Formula 3.
[Mathematical formula 4]

$$\alpha_p = \frac{v_p(\tau_0) - v_{pold}}{dt_{job}}$$

<div align="right">Formula 4</div>

This relationship is schematically illustrated in FIG. 2. In FIG. 2, $t_{axis}$ is a real time axis, $\tau_{axis}$ is a virtual time axis, and $v_{axis}$ is a speed axis. In addition, one scale of the real time axis $t_{axis}$ is a processing cycle $dt_{job}$ of the vehicle control device 10, and one scale of the virtual time axis $\tau_{axis}$ is an arbitrarily settable time step $d\tau$ (e.g., 0.1 seconds or 1 second).
When there is a preceding vehicle, the preceding vehicle state prediction unit 11 performs the following computations every processing cycle $dt_{job}$. That is, first, a preceding vehicle speed $v_p(\tau_0)$ is computed using Formula 3 (see black circles in FIG. 2). Next, with the preceding vehicle speed $v_p(\tau_0)$ being an initial value, a state of the preceding vehicle is computed every virtual time step $d\tau$ (e.g., every 0.1 seconds or every 1 second) up to after a predetermined amount of time (e.g., up to after 5 seconds) using Formula 2 (see white circles connected to each other by dotted lines in FIG. 2). As a result, it is possible to predict a state of the preceding vehicle on the basis of a result of detecting the state of the preceding vehicle every processing cycle $dt_{job}$.

On the other hand, when there is no preceding vehicle, an invalid value is output as a result of predicting a state of a preceding vehicle, such that the driving state estimation unit 13 can predict a driving force when a preceding vehicle is absent.

Since a computation value or a measurement value of the preceding vehicle speed $v_p$ or the preceding vehicle acceleration $\alpha_p$ includes a quantization error or a sensor error, an appropriate filter may be applied. As such a filter, a low-pass filter or a Kalman filter can be suitably used. Note that the initial value $v_p(\tau_0)$ of the preceding vehicle speed and the preceding vehicle acceleration $\alpha_p$ may be obtained by computation as described above, may be directly detected using a sensor, or may be provided from the preceding vehicle via a communication device or the like.

<Driving Characteristic Computation Unit 12>

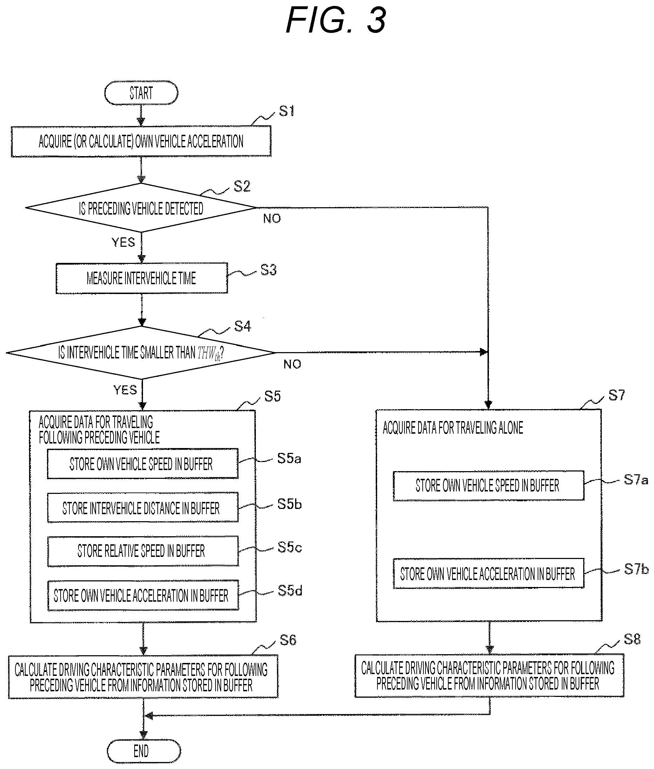

The driving characteristic computation unit 12 calculates driving characteristic parameters θ for estimating a requested driving force on the basis of an intervehicle distance dx, a relative speed dv, an own vehicle speed $v_e$, an accelerator pedal operation amount, and a brake pedal operation amount. Processing performed by the driving characteristic computation unit 12 will be described with reference to a flowchart of FIG. 3.

When driving characteristic extraction processing is started, an own vehicle acceleration $\alpha_e$ is acquired first in step S1. The own vehicle acceleration $\alpha_e$ may be calculated from an own vehicle speed $v_{es}$ measured at a current time point by the speed sensor as in Formula 5, or may be measured by an acceleration sensor that measures an acceleration of a vehicle. In addition, an appropriate filter may be applied to the calculation result or the measurement result.

[Mathematical formula 5]

$$\alpha_e = \frac{v_{es} - v_{eold}}{dt_{job}}$$

Formula 5

In Formula 5, $v_{eold}$ is an own vehicle speed $v_{es}$ before one processing cycle $dt_{job}$.

In step S2, it is determined whether a preceding vehicle is detected (that is, whether the preceding vehicle state prediction unit 11 outputs a valid value). If a preceding vehicle is detected, the process proceeds to step S3, and if no preceding vehicle is detected, the process proceeds to step S7.

In the step S3, an intervehicle time THW is measured on the basis of an intervehicle distance $dx_s$ measured at a current time point by the distance sensor and an own vehicle speed $v_{es}$ measured by the speed sensor. The intervehicle time THW, which is a time within which the own vehicle is expected to reach a position of the preceding vehicle if the current own vehicle speed $v_{es}$ is continued, is calculated as in Formula 6.

[Mathematical formula 6]

$$THW = \frac{dx_s}{v_{es}}$$

Formula 6

In step S4, the intervehicle time THW obtained in the step S3 is compared with a threshold $THW_{th}$ to estimate whether the own vehicle is traveling following the preceding vehicle or is substantially traveling alone. When the intervehicle time THW is smaller than the threshold $THW_{th}$, the process proceeds to step S5, and when the intervehicle time THW is equal to or larger than the threshold $THW_{th}$ and can be regarded as substantially traveling alone, the process proceeds to step S7.

When a driver follows a preceding vehicle, the driver generally travels behind the preceding vehicle at a distance corresponding to 2 to 3 seconds, and in this case, the intervehicle time THW is relatively small. On the other hand, when an intervehicle distance dx is extremely large even in a case where there is a preceding vehicle, an own vehicle speed $v_e$ is generally determined regardless of whether a preceding vehicle speed $v_p$ is high or low, and thus, this state needs to be determined as being substantially traveling alone. For this reason, it is necessary to set the threshold $THW_{th}$ for identifying whether the own vehicle is traveling following the preceding vehicle or is substantially traveling alone to a value larger than 2 to 3 seconds but not too large. Therefore, the threshold $THW_{th}$ is preferably in a range of 5 seconds to 20 seconds, and is particularly preferably, for example, about 15 seconds.

The threshold $THW_{th}$ may be changed on the basis of a vehicle speed. For example, the $THW_{th}$ may be set to about 15 seconds when the own vehicle is traveling at a low speed, and the $THW_{th}$ may decrease to about 5 seconds as the speed of the own vehicle increases. By doing so, when the own vehicle is substantially traveling alone, it is possible to suppress inappropriately setting driving characteristic parameters θ for traveling following the preceding vehicle.

When it is determined in the step S4 that the own vehicle is traveling following the preceding vehicle, the process proceeds to step S5, and data required to calculate motion characteristic parameters θ for traveling following the preceding vehicle is acquired. First, in step S5a, an own vehicle speed $v_e$ is stored in a buffer. Next, in step S5b, an intervehicle distance dx is stored in the buffer. In addition, in step S5c, a relative speed dv is stored in the buffer. Further, in step S5d, an own vehicle acceleration $\alpha_e$ is stored in the buffer. Note that a storage processing order is not particularly limited, and information to be stored in the buffer is not limited thereto. By increasing the information stored in the buffer, it is possible to increase an amount of information for explaining driving characteristics, and it is possible to increase a driving state estimation accuracy of the driving state estimation unit 13. On the other hand, by reducing the information stored in the buffer, it is possible to perform calculation processing at a high speed, and it is possible to expect a reduction in memory consumption.

The driving characteristic parameters θ can be calculated by storing at least the intervehicle distance dx, the relative speed dv, and the own vehicle acceleration $\alpha_e$ in the buffer. Here, the buffer is a database capable of storing an intervehicle distance dx, etc. every processing cycle $dt_{job}$ of the driving characteristic computation unit 12 and retaining the stored data in such an array or a list structure that data within a predetermined amount of time can be referred to back, and it is preferable to set such a time to about 30 seconds, 1 minute, or 10 minutes. In addition, the storage in the buffer may not be performed every processing cycle $dt_{job}$, and for example, down-sampling may be performed at predetermined time intervals such as every 1 second or every 5 seconds, or sampling may be performed based on traveling distance such as every 5 m or every 10 m. Furthermore, sampling can be performed, such as every time an own vehicle speed $v_e$ changes to 1 km/h or 5 km/h, and these may be used in combination.

In step S6, driving characteristic parameters θ are calculated using the information acquired in the step S5. An example of a driving state estimation model reflecting the driving characteristic parameters θ calculated here is shown in Formula 7.

[Mathematical formula 7]

$$y = \theta_0 + \theta_1 \cdot x_1 + \theta_2 \cdot x_2$$

Formula 7

Formula 7 is an example of a driving state estimation model that estimates a driving state y of the own vehicle on the basis of two explanatory variables $x_1$ and $x_2$, in which the driving state y (e.g., an own vehicle acceleration $\alpha_e$) is estimated on the basis of the explanatory variable $x_1$ (e.g., an intervehicle distance dx) and the explanatory variable $x_2$ (e.g., a relative speed dv). In Formula 7, $\theta_0$, $\theta_1$, and $\theta_2$ are driving characteristic parameters θ to be obtained in the step S6, and improving accuracies of these driving characteristic parameters θ makes it possible to improve an accuracy in estimating the driving state y.

As in Formula 8, when the information acquired in the step S5 increases such as $[x_0, x_1, x_2,..., x_{(n-1)},$ and $x_n]$, the driving characteristic parameters θ to be obtained in the step S6 also increase such as $[\theta_0, \theta_1, \theta_2,..., \theta_{(n-1)},$ and $\theta_n]$.

[Mathematical formula 8]

$$y = \theta_0 + \theta_1 \cdot x_1 + \theta_2 \cdot x_2 + \cdots + \theta_{n-1} \cdot x_{n-1} + \theta_n \cdot x_n$$

Formula 8

The driving characteristic parameters θ in Formula 7 or 8 are determined by the least squares method using the information acquired in the step S5. Formula 9 is a hypothesis function $h_g(x)$ including driving characteristic parameters θ to be obtained.

[Mathematical formula 9]

$$h_g(x) = \theta_0 + \theta_1 \cdot x_1 + \theta_2 \cdot x_2$$

Formula 9

The information acquired in the step S5 is visualized, for example, in a form shown in Table 1.

[Table 1]

Table 1

| Sample no. i | Own vehicle acceleration y | Intervehicle distance $x_1$ | Relative speed $x_2$ |
|---|---|---|---|
| 0 | $\alpha_{e0}$ | $dx_0$ | $dv_0$ |
| 1 | $\alpha_{e1}$ | $dx_1$ | $dv_1$ |
| 2 | $\alpha_{e2}$ | $dx_2$ | $dv_2$ |
| ⋮ | ⋮ | ⋮ | ⋮ |
| n-1 | $\alpha_{en-1}$ | $dx_{n-1}$ | $dv_{n-1}$ |
| n | $\alpha_{en}$ | $dx_n$ | $dv_n$ |

As shown in Table 1, when n samples are stored in the buffer, $\theta_0$, $\theta_1$, and $\theta_2$ for minimizing $J(\theta_0, \theta_1, \theta_2)$ are computed as driving characteristic parameters $\theta$ with the sum of errors between hypothesis functions $h_g(x)$ and own vehicle accelerations $\alpha_e$ as in Formula 10.
[Mathematical formula 10]

$$J(\theta_0, \theta_1, \theta_2) = \sum_{i=1}^{n} \left( h_g\left(x^{(i)}\right) - y^{(i)} \right)^2$$

Formula 10

In order to express the hypothesis function $h_g(x)$ of Formula 9 as a matrix, the driving characteristic parameters $\theta$ and the explanatory variables x are defined as in Formula 11.
[Mathematical formula 11]

$$\theta = \begin{bmatrix} \theta_0 \\ \theta_1 \\ \theta_2 \end{bmatrix}, x = \begin{bmatrix} x_0 \\ x_1 \\ x_2 \end{bmatrix} \quad .$$

Formula 11

Then, the hypothesis function $h_g(x)$ can be expressed as a product of a transposed matrix of the driving characteristic parameters $\theta$ and a matrix of the explanatory variables x as in Formula 12.
[Mathematical formula 12]

$$h_g(x) = \theta^T x$$

Formula 12

Since a matrix X in which a combination of data for each sample number in Table 1 (a combination of data for each row) is given as a set of data can be expressed as in Formula 13, each driving characteristic parameter $\theta$ is derived by calculating Formula 14. Then, the driving characteristic parameters $\theta$ calculated in this way are transmitted to the driving state estimation unit 13.
[Mathematical formula 13]

$$x^{(i)} = \begin{bmatrix} x_0^{(i)} \\ x_1^{(i)} \\ x_2^{(i)} \end{bmatrix}, X = \begin{bmatrix} \left(x^{(1)}\right)^T \\ \left(x^{(2)}\right)^T \\ \vdots \\ \left(x^{(n-1)}\right)^T \\ \left(x^{(n)}\right)^T \end{bmatrix} = \begin{bmatrix} x_0^{(1)} & x_1^{(1)} & x_2^{(1)} \\ x_0^{(2)} & x_1^{(2)} & x_2^{(2)} \\ & \vdots & \\ x_0^{(n-1)} & x_1^{(n-1)} & x_2^{(n-1)} \\ x_0^{(n)} & x_1^{(n)} & x_2^{(n)} \end{bmatrix}, y = \begin{bmatrix} y^{(1)} \\ y^{(2)} \\ \vdots \\ y^{(n-1)} \\ y^{(n)} \end{bmatrix}$$

Formula 13

[Mathematical formula 14]

$$\theta = (X^T X)^{-1} X^T y$$

Formula 14

On the other hand, when no preceding vehicle is detected in the step S2 or when it is determined in the step S4 that the own vehicle is substantially traveling alone, data required to calculate driving characteristic parameters $\theta$ for traveling alone is acquired in the step S7.

The processing in the step S7 is basically similar to the processing in the step S5, and an explanatory variable x for explaining a driving state y of the own vehicle (e.g., an own vehicle acceleration $\alpha_e$) in Formula 7 is stored in the buffer. Specifically, an own vehicle speed $v_e$ is stored in the buffer in step S7a, and an own vehicle acceleration $\alpha_e$ is stored in the buffer in step S7b.

Further, in step S8, driving characteristic parameters $\theta$ are calculated in the same manner as in the step S6, and the calculated driving characteristic parameters $\theta$ for traveling alone is output to the driving state estimation unit 13.

Although the method of calculating driving characteristic parameters $\theta$ for each of traveling following the preceding vehicle and traveling alone has been described above, the method of calculating driving parameters performed by the driving characteristic computation unit 12 in the present embodiment is not limited to the above-described method, and it is only required to predict an acceleration generated according to an operation of a driver. For example, as described above, driving characteristics may be modeled as a probability model according to the kernel density estimation method or the mixed Gaussian distribution using an acceleration detection result and explanatory variables explaining the acceleration detection result, and information for generating these distributions may be used as driving characteristic parameters.

Alternatively, driver's intervehicle times THW and accelerations for increasing a speed and for decrease a speed may be measured, such that an acceleration to be required by the driver may be obtained to increase the speed to an average value of the accelerations for increasing the speed when an intervehicle time THW at a current time point is larger than an average value of the obtained intervehicle times and to decrease the speed to an average value of the accelerations for decreasing the speed when an intervehicle time at a current time point is smaller than an average value of the obtained intervehicle times, or such that an average value of the accelerations, an average intervehicle time, and an average collision margin time may be used as driving characteristic parameters.

<Driving State Estimation Unit 13>

The driving state estimation unit 13 calculates an acceleration of the own vehicle to be required by the driver in the future and predicts a driving state of the own vehicle, on the basis of a future state (a position and a speed) of the preceding vehicle predicted by the preceding vehicle state prediction unit 11, driving characteristic parameters $\theta$ of the own vehicle extracted by the driving characteristic computation unit 12, and the driving state estimation model shown in Formula 7 or Formula 8. Hereinafter, the calculation thereof will be described.

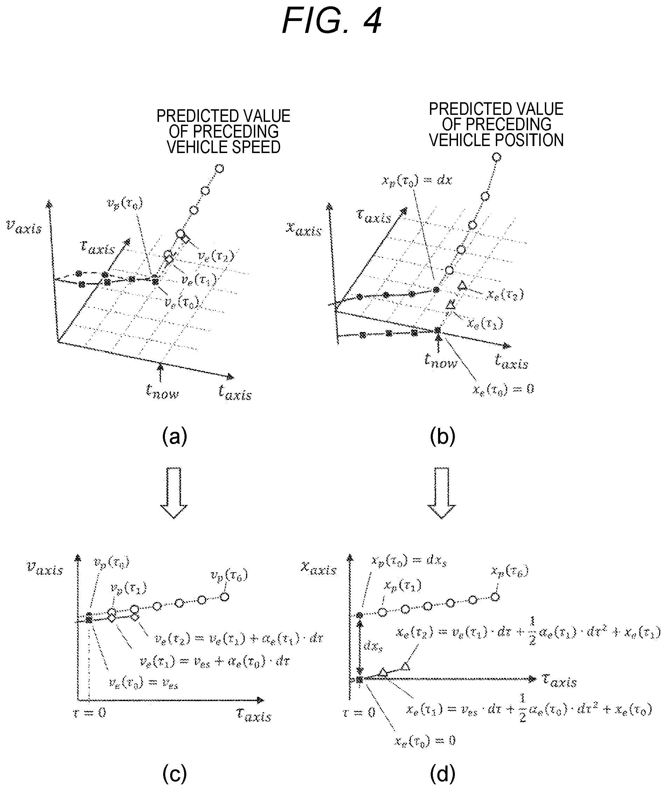

FIG. 4 is a schematic diagram illustrating a process of deriving a driving state by the driving state estimation unit 13.

In FIG. 4(a), $t_{axis}$ is a real time axis, $\tau_{axis}$ is a virtual time axis, and $v_{axis}$ is a speed axis. As being clear from FIG. 4(a), a preceding vehicle speed $v_p$ at each time point indicated by a black circle and an own vehicle speed $v_e$ at each time point indicated by a black square are plotted on a plane based on the real time axis $t_{axis}$ and speed axis $v_{axis}$. In addition, with a preceding vehicle speed $v_p(\tau_0)$ at a current time $t_{now}$ as an initial value, future preceding vehicle speeds $v_p(\tau_n)$ predicted by the preceding vehicle state prediction unit 11, which are indicated by white circles, are plotted at time step $d\tau$

intervals in a virtual time axis $\tau_{axis}$ direction. Also, with an own vehicle speed $v_e(\tau_0)$ at the current time $t_{now}$ as an initial value, own vehicle speeds $v_e(\tau_n)$ estimated by the driving state estimation unit 13 while predicting a driving force to be required by the own vehicle using the driving characteristic parameters $\theta$ calculated by the driving characteristic computation unit 12, which are indicated by white squares, are plotted at time step $d\tau$ intervals in the virtual time axis $\tau_{axis}$ direction. Note that although the own vehicle speeds are shown only up to $v_e(\tau_2)$ in FIG. 4(a), which illustrates a state in which the own vehicle speeds $v_e(\tau_n)$ are being calculated, $v_e(\tau_3)$ and subsequent own vehicle speeds may be calculated and plotted.

Similarly, in FIG. 4(b), $t_{axis}$ is a real time axis, $\tau_{axis}$ is a virtual time axis, and $x_{axis}$ is a position axis. A preceding vehicle position $x_p$ at each time point indicated by a black circle and an own vehicle position $x_e$ at each time point indicated by a black square are plotted on a plane based on the real time axis $t_{axis}$ and the position axis $x_{axis}$. In addition, with a preceding vehicle position $x_p(\tau_0)$ at a current time $t_{now}$ as an initial value, future preceding vehicle positions $x_p(\tau_n)$ predicted by the preceding vehicle state prediction unit 11, which are indicated by white circles, are plotted at time step $d\tau$ intervals in a virtual time axis $\tau_{axis}$ direction. Also, with an own vehicle position $x_e(\tau_0)$ =0 at the current time $t_{now}$ as an initial value, own vehicle positions $x_e(\tau_n)$ estimated by the driving state estimation unit 13 while predicting a driving force to be required by the own vehicle using the driving characteristic parameters $\theta$ calculated by the driving characteristic computation unit 12, which are indicated by white triangles, are plotted at time step $d\tau$ intervals in the virtual time axis $\tau_{axis}$ direction. Note that although the own vehicle positions are shown only up to $x_e(\tau_2)$ in FIG. 4(b), which illustrates a state in which the own vehicle positions $x_e(\tau_n)$ are being calculated, $v_e(\tau_3)$ and subsequent own vehicle positions may be calculated and plotted.

In the present embodiment, since the feature of the vehicle control device 10 is processing for predicting a behavior of the own vehicle and predicting a required driving force of the own vehicle in the virtual time axis $\tau_{axis}$ direction, the following description will be focused on prediction in the virtual time axis $\tau_{axis}$ direction at a current time $t_{now}$.

FIG. 4(c) is a graph extracting and two-dimensionally expressing a result of predicting a speed in the virtual time axis $\tau_{axis}$ direction at a current time $t_{now}$ which is three-dimensionally expressed in FIG. 4(a), and FIG. 4(d) is a graph extracting and two-dimensionally expressing a result of predicting a position in the virtual time axis $\tau_{axis}$ direction at a current time $t_{now}$ which is three-dimensionally expressed in FIG. 4(c).

In FIG. 4(c) or 4(d), in order to estimate an own vehicle speed $v_e(\tau_n)$ or an own vehicle position $x_e(\tau_n)$ at a certain time when a subscript accompanied by $\tau$ is n=1 or more, it is necessary to predict an own vehicle acceleration $\alpha_e(\tau_n)$ as a premise, as being clear from Formula 1 or 2. The own vehicle acceleration $\alpha_e(\tau_n)$ is calculated by substituting the driving characteristic parameters $\theta$ calculated by the driving characteristic computation unit 12 into Formula 7. When $\tau$=0, the acceleration obtained according to Formula 5 is adopted as an initial value $\alpha_e(\tau_0)$.

From the accelerations $\alpha_e(\tau_n)$ obtained here, speeds $v_e(\tau_{n+1})$ in next time steps are sequentially estimated as in Formula 15. The state of the own vehicle is changed on the virtual time, and based thereon, a required acceleration is estimated on the basis of the driving characteristic parameters $\theta$ according to Formula 7.

[Mathematical formula 15]

$$v_e(\tau_{n+1}) = v_e(\tau_n) + \alpha_e(\tau_n) \cdot d\tau \cdot$$

Formula 15

[Mathematical formula 16]

$$x_e(\tau_{n+1}) = v_e(\tau_n) \cdot d\tau + \frac{1}{2} \alpha_e(\tau_n) \cdot d\tau^2 + x_e(\tau_n)$$

Formula 16

When there is no preceding vehicle, an invalid value is output as a result of predicting a state of a preceding vehicle. Therefore, changes in own vehicle acceleration are recursively estimated by sequentially updating states of the own vehicle for respective prediction steps. In this case, by using the driving characteristic parameters $\theta$ calculated in the step S8 of FIG. 3 rather than the driving characteristic parameters $\theta$ calculated in the step S6 of FIG. 3, an acceleration $\alpha_e$ required by the driver for traveling alone can be estimated.

As described above, the driving state estimation unit 13 generates a predicted value of an own vehicle acceleration $\alpha_e$ in the virtual time axis $\tau_{axis}$ direction from the driving characteristic parameters $\theta$.

Further, the driving state estimation unit 13 estimates a driving force required by the vehicle from the estimated own vehicle acceleration $\alpha_e(\tau_n)$. The driving force may be estimated by converting the acceleration using a motion model in which a motion of the vehicle is replaced with a motion of a mass point system as in Formula 17, or by simply preparing a map in which a requested driving force is set with respect to an acceleration and a speed of the vehicle.

An example using the motion model in which the motion of the vehicle is replaced with the motion of the mass point system will be described.

[Mathematical formula 17]

$$F_d(\tau_n) - R_a(\tau_n) - R_r(\tau_n) - R_s(\tau_n) - R_{acc}(\tau_n) = 0$$

Formula 17

In Formula 17, $F_d(\tau_n)$ is a driving force to be obtained. In addition, $R_a(\tau_n)$ is an air resistance, $R_r(\tau_n)$ is a rolling resistance, $R_s(\tau_n)$ is a slope resistance, and $R_{acc}(\tau_n)$ is an acceleration resistance, which are active components obtained according to the following formulas, respectively.
[Mathematical formula 18]

$$R_a(\tau_n) = \frac{1}{2}\rho C_d A v_e(\tau_n)^2 \quad \cdot$$

Formula 18

In Formula 18, $\rho$ is an air density, which may be set to a predetermined value such as 1.1841 kg/m$^3$ on the assumption of 25°C and 1 atm, or may be corrected on the basis of an environmental temperature and an atmospheric pressure. $C_d$ is a drag coefficient, which can be set to a value such as 0.3, 0.25, or 0.35 on the basis of specifications of a vehicle equipped with the vehicle control device according to the present embodiment. A is a front projected area of a vehicle, which can be determined on the basis of specifications of the vehicle, such as in a range of 2m$^2$ to 10m$^2$. $v_e(\tau_n)$ is an estimated value of a speed of the vehicle at each time calculated as in Formula 15.
[Mathematical formula 19]

$$R_r(\tau_n) = \mu M g \cos\theta(\tau_n)$$

Formula 19

[Mathematical formula 20]

$$R_s(\tau_n) = M g \sin\theta(\tau_n)$$

Formula 20

In Formula 19, $\mu$ is a rolling resistance coefficient, which can be determined according to a state of a wheel mounted on a vehicle 100 and a traveling road surface, and can be set to a value such as 0.02 or 0.005. M is a weight of the vehicle 100, which can be set to a value according to a weight of fuel, the number of occupants, and an amount of loads in addition to a dry weight of the vehicle. In a case where the number of occupants, an amount of loads, and a weight of fuel in the vehicle cannot be grasped, either a predetermined value obtained by adding a predetermined weight to the dry weight of the vehicle or the dry weight of the vehicle may be set as a representative predetermined value. g is a gravitational acceleration, which may be set to a predetermined value such as 9.80665 m/s$^2$, 9.8 m/s$^2$, or 10 m/s$^2$. $\theta(\tau_n)$ is a road surface gradient at the position of the vehicle estimated as in Formula 16. The same applies to Formula 20.
[Mathematical formula 21]

$$R_{acc}(\tau_n) = (M + \Delta M) \times (\alpha(\tau_n) - g \sin\theta(\tau_n))$$

Formula 21

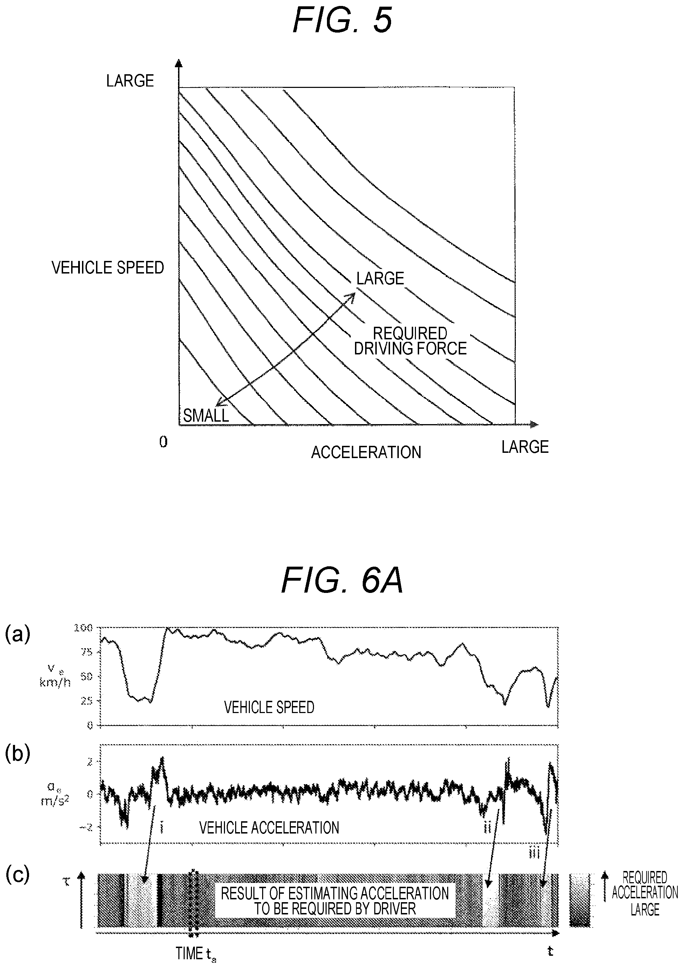

In Formula 21, $\Delta M$ is an inertial weight of the vehicle, which may be set to a predetermined value such as 3% or 8% of the weight M of the vehicle, or may be set using a measured value. $\alpha(\tau_n)$ is an acceleration estimated according to Formula 7.
Note that it is not absolutely necessary to accurately derive all the active components defined according to Formulas 18 to 21. For example, in a case where a gradient of a path is an unknown value, it may be substituted with a predetermined value, or substituted with 0 assuming that the vehicle is moving on a plane, but in this case, the estimation of the driving force deteriorates. Needless to say, the more accurately each parameter can be set, the more improved the accuracy in estimating a driving force is.
Although the example using the motion model of the mass point system has been described above, a map in which relationships between an acceleration obtained by prediction, a speed of a vehicle, and a required driving force are set as in FIG. 5 may be used.

By recursively calculating a change in acceleration based on driving characteristic parameters θ in accordance with a future state of the preceding vehicle obtained by the preceding vehicle state prediction unit as described above, it is possible to estimate a future driving force state of the own vehicle.

Next, an example of a driving state estimated by the driving state estimation unit 13 will be described with reference to FIGS. 6A to 6C.

First, in FIG. 6A, FIG. 6A(a) illustrates a change in own vehicle speed $v_{es}$, FIG. 6A(b) illustrates a change in own vehicle acceleration $\alpha_e$, and FIG. 6A(c) illustrates a result of estimating an acceleration to be required by a driver as an example of an estimation result of the driving state estimation unit 13. Note that, in FIG. 6A(c), the horizontal axis is a real time axis $t_{axis}$, and the vertical axis is a virtual time axis $\tau_{axis}$. As illustrated on the right side of FIG. 6A(c), the lower the brightness (closer to black), the smaller the required acceleration, and the higher the brightness (closer to white), the larger the required acceleration.

In this example, the own vehicle speed $v_e$ illustrated in FIG. 6A(a) increases in periods (see areas near start points of arrows i, ii, and iii) during which the own vehicle acceleration $\alpha_e$ in FIG. 6A(b) is positive, whereas the own vehicle speed $v_e$ decreases in periods during which the own vehicle acceleration $\alpha_e$ is negative. Upon comparing FIGS. 6A(b) and 6A(c), it is seen that there is a white region with high brightness in FIG. 6A(c) prior to the period in which the own vehicle acceleration $\alpha_e$ in FIG. 6A(b) increases. That is, by using the driving characteristic parameters θ extracted by the driving characteristic computation unit 12 from driver's driving tendencies of the own vehicle, the driving state estimation unit 13 accurately predicts a driver's acceleration operation before the own vehicle is actually accelerated. Similarly, since there is a black region with low brightness in FIG. 6A(c) prior to the period in which the own vehicle acceleration $\alpha_e$ in FIG. 6A(b) decreases, the driving state estimation unit 13 accurately predicts a driver's deceleration operation before the own vehicle is actually decelerated. Note that, in FIG. 6A(c), the upward direction of the drawing corresponds to a positive direction (a direction toward the future) of the virtual time τ, and it is indicated that a change in required acceleration from the near future to the far future is predicted upward from below at each time of the real time t.

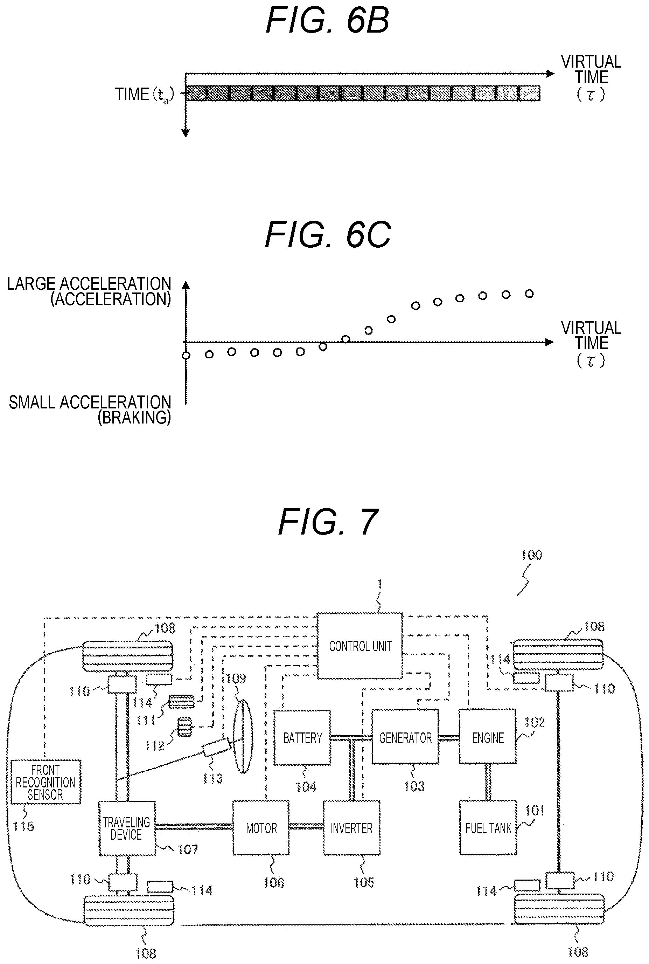

FIG. 6B is a diagram obtained by extracting a result of predicting a driver-required acceleration estimated by the driving state estimation unit 13 at a certain time $t_a$. This is obtained by rewriting data in the virtual time axis $\tau_{axis}$ direction at a time $t_a$ in FIG. 6A(c) in the horizontal direction on the drawing. Thus, the passage of the virtual time τ toward the right side on the paper in FIG. 6B is equivalent to the passage of the virtual time τ toward the upper side on the drawing at the time $t_a$ in FIG. 6A(c). In FIG. 6B, since the brightness becomes higher and closer to white as the virtual time τ passes, it is seen therefrom that the driving state estimation unit 13 predicts an increase in acceleration to be required by the driver at the time $t_a$ in the future.

FIG. 6C is a diagram in which a change in shading in FIG. 6B is rewritten as a change in acceleration to be required. As shown therein, the change in brightness from a dark color to a light color in FIG. 6B is expressed as an increase in acceleration to be required from a small acceleration to a large acceleration as the virtual time τ passes in FIG. 6C.

As described above, the vehicle control device 10 according to the first embodiment includes a preceding vehicle detection unit, a preceding vehicle state prediction unit that predicts a future state of a preceding vehicle on the basis of a state of the preceding vehicle obtained by the preceding vehicle detection unit, and a driving characteristic computation unit that computes driving characteristics in order to predict what driving state an own vehicle becomes according to the predicted state of the preceding vehicle, such that a further driving state of the own vehicle in which the driving characteristics are reflected is predicted by recursively estimating a driving state with respect to the further state of the preceding vehicle obtained by the preceding vehicle state prediction unit.

By doing so, it is possible to accurately predict a driving state of an own vehicle that changes when a driver operates an accelerator pedal or a brake pedal, and it is possible to estimate an acceleration to be required by the driver in the future with driving characteristics of the driver in consideration.

[Second Embodiment]

Next, a second embodiment of the present invention will be described with reference to FIGS. 7 to 15. Note that redundant description of common points shared with the first embodiment will be omitted.

FIG. 7 illustrates a configuration diagram of a vehicle 100 according to the second embodiment of the present invention equipped with a control unit 1 including the vehicle control device 10 of the first embodiment.

The vehicle 100 illustrated in FIG. 7 is a series hybrid electric vehicle driven only by a driving force of a motor, in which fuel stored in a fuel tank 101 is converted from chemical energy to thermal and pressure energy through combustion by an engine 102 (an internal combustion engine), for conversion into kinetic energy (a rotational force) via a piston mechanism or a crank mechanism, which is not illustrated, to drive a generator 103. An input shaft of the generator 103 is rotated by a rotational force of the engine 102 and a magnet, which is not illustrated, such that electric power is generated by electromagnetic induction. The electric power produced by the generator 103 is charged into a battery 104, and is converted into kinetic energy (a rotational force) by a motor 106 via an inverter 105. When the engine 102 is in a stopped state, only electric power of the battery 104 is input to the motor 106 via the inverter 105 to convert the electric power into kinetic energy. In addition, when the engine 102 is in a stopped state and the motor 106 requires additional electric power, the electric power of the battery 104 is used to motor-drive the generator 103 to start the engine 102.

The kinetic energy converted by the motor 106 serves as a driving force for causing the vehicle 100 to travel, and the vehicle 100 is moved forward or backward by rotating wheels 108 via a traveling device 107 to cause the vehicle 100 to travel. The vehicle 100 is turned in a left or right direction by changing an angle of the wheels 108 using a steering device 109. Brake actuators 110 convert kinetic energy into thermal energy by pressing a friction material against drums or discs that rotate together with the wheels 108 to brake the vehicle 100. Although the simple configuration of the vehicle 100 has been described above, the above-described configuration enables the vehicle 100 to realize motions such as running, turning, and stopping.

The control unit 1 receives an acceleration request from the driver based on an operation amount of an accelerator pedal 111, and detects the acceleration request through an accelerator pedal position sensor, which is not illustrated. A braking request is detected based on an operation amount of a brake pedal 112 through a brake switch, which is not illustrated, or a brake fluid pressure, which is not illustrated. It is detected that there is a request for turning the vehicle by detecting an amount by which the driver operates the steering device 109 using a steering angle sensor 113. Vehicle speed sensors 114 detect a rotation speed of the wheels 108 as a traveling speed of the vehicle 100. In addition, a front recognition sensor 115 senses another vehicle traveling in front of the vehicle 100, a pedestrian, an obstacle on a road, etc., and measures and detects a moving speed and a distance to an object.

As the front recognition sensor 115, an imaging device, a radar device, a sonar, or a laser scanner can be appropriately used. For example, the imaging device includes a monocular camera or a stereo camera using a solid-state imaging element such as a charge coupled device (CCD) or a complementary metal-oxide semiconductor (CMOS), and acquires a road condition in front of the own vehicle, a state of an obstacle including a preceding vehicle, information on regulations, an environmental circumstance, etc. by detecting visible light or infrared light. When visible light is detected, a feature regarding a shape of the object is extracted on the basis of a color difference or a luminance difference. When infrared light is detected, radiation is detected by the infrared light, and a feature regarding a shape of the object is extracted from a temperature difference.

In the stereo camera, imaging elements capable of extracting the above-described feature are installed at certain intervals and their shutters are synchronized, for example, to calculate a distance by obtaining a pixel shift amount as parallax for an image shifted in the horizontal direction. In addition, a direction of a target is calculated on the basis of information such as where such a feature exists on the pixel. The information acquired in this manner is output to the control unit 1.

For example, the radar device detects an obstacle such as another vehicle existing in front of, beside, or behind the own vehicle, and acquires information such as a distance between the own vehicle and the obstacle, identification information about another vehicle, and a relative speed dv. The radar device includes an oscillator that oscillates radio waves and a receiver that receives the radio waves to transmit the radio waves oscillated by the oscillator toward an external space. Some of the oscillated radio waves reach the object, and are detected by the receiver as reflected waves. By applying an appropriate modulation to an amplitude, a frequency, or a phase of the transmitted radio waves, a time difference between transmission and reception detected based on correlation between the modulated amplitude, frequency, or phase and the signal detected by the receiver is obtained, and the time difference is converted into a distance.

An angle at which the object exists can be detected by transmitting radio waves only in a limited direction and changing the transmission direction for scanning. The acquired information is output to the control unit 1. In a case where the front recognition sensor 115 is a sonar, detection can be similarly performed by replacing radio waves with sound waves. In addition, in a case where a laser scanner is used, detection can also be similarly performed by replacing radio waves with laser beams.

The control unit 1 detects controlled states of the engine 102, the generator 103, the battery 104, the inverter 105, and the motor 106 to control the engine 102, the generator 103, the battery 104, the inverter 105, and the motor 106 so as to realize a driver's request for acceleration, braking, or turning as described above.

Although it is illustrated in FIG. 7 that some elements are not connected to the control unit 1, all elements may basically be connected to the control unit 1 in certain forms. The control unit 1 may include elements that are not connected to the control unit 1 or may be connected to elements that are not illustrated in FIG. 1 if such elements are necessary to execute processing required for operating the vehicle 100 although the present invention is not characterized thereby, or the control unit 1 may execute processing other than the processing included in the disclosure of the invention.

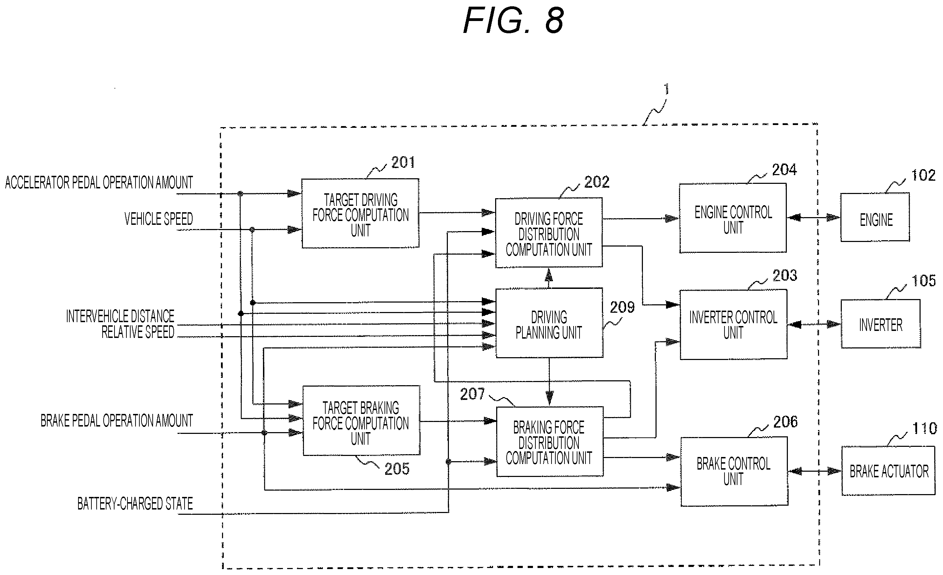

FIG. 8 is a schematic diagram illustrating the control unit 1. The control unit 1 includes a microcomputer or a central processing computer (a central processing unit (CPU)) that performs a computation, a non-volatile memory (a read only memory (ROM)) that stores a program describing computation processing, a main memory (a random access memory (RAM)) for storing information in the process of performing the computation, an analog-to-digital (A/D) converter that quantizes an analog amount of a sensor signal and converts the quantized analog amount into program-applicable information, a communication port for performing communication with another control unit 1, etc., and executes various kinds of processing for operating the vehicle 100.

Hereinafter, although processing to be described below has a broad or narrow frequency width depending on what kind of processing is performed, the processing is repeatedly executed in a cycle of about 1000 Hz to 10 Hz. A target driving force computation unit 201 calculates a driver's request for accelerating the vehicle 100 on the basis of an own vehicle speed $v_e$ and an accelerator pedal operation amount. A driving force distribution computation unit 202 outputs to an inverter control unit 203 a target motor state for realizing a target driving force calculated by the target driving force computation unit 201, while calculating electric power to be generated by the engine 102 driving the generator 103 from a charged state of the battery and electric power to be covered when the battery is discharged, and outputting to an engine control unit 204 a target engine state in which the generator 103 can generate desired electric power.

The engine control unit 204 controls an opened degree of a throttle valve included in the engine 102, which is not illustrated, in order to realize a target engine state. The throttle valve included in the engine 102, which controls an amount of air flowing into the engine 102, can increase an amount of fuel that can be combusted, that is, can increase an engine output, when the amount of air flowing into the engine 102 increases. As a result, an amount of electric power that can be generated by the generator 103 increases, and accordingly, an amount of electric power that can be supplied to the motor 106 via the inverter 105 increases, thereby increasing a driving force for causing the vehicle 100 to travel.

A target braking force computation unit 205 computes a braking force of the vehicle 100 on the basis of an amount by which the driver operates the brake pedal and an amount by which the driver operates the accelerator pedal. Basically, a brake control unit 206 controls the brake actuators 110 based on the brake pedal operation amount.

In a state where the accelerator pedal is not operated, the target driving force computation unit 201 calculates a driver's request for decelerating the vehicle 100 on the basis of the brake pedal operation amount. A braking force distribution computation unit 207 calculates an amount by which the kinetic energy of the vehicle 100 is converted into thermal energy via the brake actuators 110 with respect to a braking force generated in the vehicle 100, and an amount by which the kinetic energy of the vehicle 100 is regenerated as electric energy by causing the inverter 105 and the motor 106 to perform a regenerative operation via the inverter control unit 203 on the basis of a battery-charged state.

When notified of the distribution of the braking force by the braking force distribution computation unit 207, the brake control unit 206 controls the brake actuators 110 to realize a braking force determined by the braking force distribution unit instead of the braking force based on the brake pedal operation amount. The inverter control unit 203 controls the inverter 105 to output a frequency lower than a synchronous speed of the motor 106. Meanwhile, the motor 106 rotates at a rotation speed corresponding to a speed of the vehicle 100, which is taken externally through the wheels 108 and the traveling device 107 because of an inertial force of the vehicle 100. The motor 106 attempts to maintain an operating frequency of the inverter 105, which causes a slip and generates a braking torque proportional to a slip frequency. As a result, electric energy according to the braking torque is returned to the inverter 105 and is charged into the battery 104 to use regenerative braking capable of regenerating traveling energy as electric power, thereby improving the fuel efficiency of the vehicle 100.

When neither the accelerator pedal nor the brake pedal is operated, the target braking force computation unit computes a braking force to realize a braking force for simulating an engine brake based on an own vehicle speed $v_e$, and performs regenerative braking through the braking force distribution computation unit 207 and the inverter control unit 203. By doing so, it is possible to realize the same ride quality as that in a vehicle on which only an engine is mounted, and it is possible to suppress discomfort caused when a driver changes the vehicle on which only the engine is mounted to the vehicle 100.

A driving planning unit 209 includes the vehicle control device 10 according to the first embodiment, and corrects the operations of the driving force distribution computation unit 202 and the braking force distribution computation unit 207 on the basis of an intervehicle distance dx with respect to a preceding vehicle and a relative speed dv with respect to a preceding vehicle acquired by the front recognition sensor 115 in addition to an accelerator pedal operation amount, a brake pedal operation amount, an own vehicle speed $v_e$, and a battery-charged state.

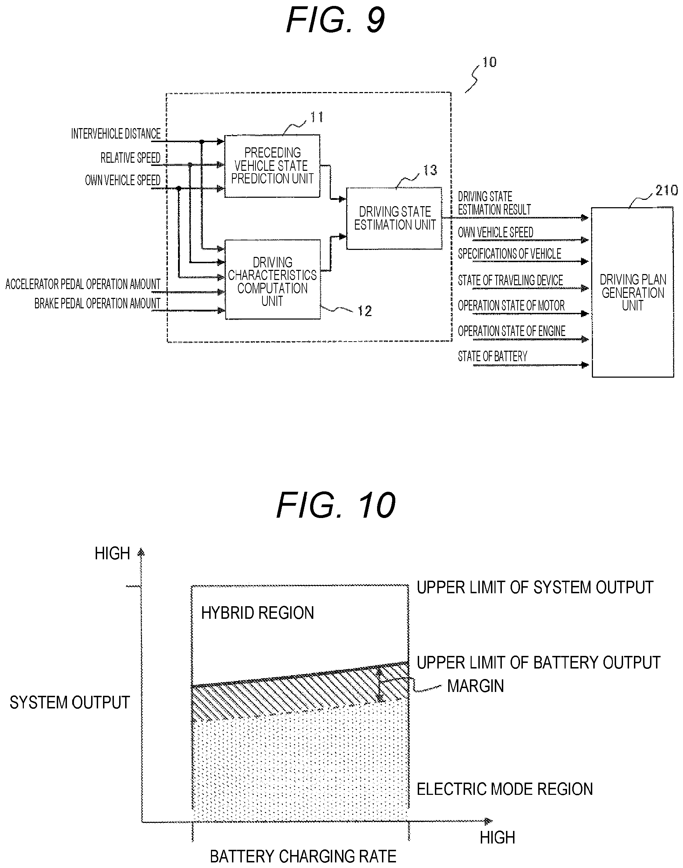

FIG. 9 is a block diagram of the driving planning unit 209. As illustrated therein, the driving planning unit 209 includes a vehicle control device 10 and a driving plan generation unit 210 that generates a driving plan on the basis of a driving state estimation result estimated by the vehicle control device 10. Note that the vehicle control device 10 may be a component of the control unit 1.

The driving plan generation unit 210 calculates a required electric power of the motor 106 using Formulas 22 to 26 from the driving state estimation result generated by the driving state estimation unit 13, as well as the output characteristic of the motor 106, the characteristic of the battery 104, and the characteristics of the traveling device 107 and the wheels 108, which are included in the vehicle 100.

Formula 22 is an equation representing a driving torque $Tq_{dem}$ of the vehicle 100, where $D_{tire}$ is a diameter of the wheel 108.

[Mathematical formula 22]

$$Tq_{dem}(\tau_n) = F_d(\tau_n) \times \frac{D_{tire}}{2}$$

<div align="right">Formula 22</div>

Formula 23 is an equation representing a rotation speed $N_{shaft}$ on an output shaft side of the traveling device 107 connected to the wheel 108, where $v_e$ is an own vehicle speed, and $\pi$ is the circular constant.
[Mathematical formula 23]

$$N_{shaft}(\tau_n) = \frac{v_e}{\pi \times D_{tire}}$$

<div align="right">Formula 23</div>

Formula 24 is an equation representing a rotation speed $N_{mot}$ of the motor 106, where GR is a transmission ratio of a transmission or a final gear constituting the traveling device 107, which is not illustrated.
[Mathematical formula 24]

$$N_{mot}(\tau_n) = N_{shaft}(\tau_n) \times GR$$

<div align="right">Formula 24</div>

Formula 25 is an equation representing an output torque $Tq_{mot}$ required for the motor 106.
[Mathematical formula 25]

$$Tq_{mot}(\tau_n) = \frac{Tq_{dem}(\tau)}{GR}$$

<div align="right">Formula 25</div>

Since the output torque $Tq_{mot}$ and the rotation speed $N_{mot}$ of the motor 106 are obtained according to Formulas 24 and 25, a required electric power $P_{mot}$ (or electric power consumption) of the motor 106 can be predicted as in Formula 26. Note that $\eta_{mot}$ is the efficiency of the motor 106.
[Mathematical formula 26]

$$P_{mot}(\tau_n) = N_{mot}(\tau_n) \times 2 \times \pi \times Tq_{mot}(\tau_n) \times \frac{1}{\eta_{mot}} \quad \cdot$$

<div align="right">Formula 26</div>

By comparing the required electric power $P_{mot}$ of the motor 106 predicted as described above with electric power that can be output from the battery 104, the driving plan generation unit 210 generates command values to the driving force distribution computation unit 202 and the braking force distribution computation unit 207. Specifically, an engine start determination threshold with respect to a charged state of the battery 104 for determining distribution of electric power to be supplied to the motor 106 is changed so that the motor 106 realizes a driving force.

A relationship between a battery charging rate and a system output, which is used at the time of determining a power source of electric power to be supplied to the motor 106, will be described with reference to FIG. 10. In FIG. 10, the vertical axis indicates a system output, and the horizontal axis indicates a battery charging rate. An upper limit of the system output shown at an upper portion is also a maximum output of the motor 106 driven for the vehicle 100 to travel.

In order to drive the motor 106 at the maximum output, it is necessary to supply both electric power accumulated in the battery 104 and electric power generated by the generator 103 to the inverter 105. In FIG. 10, a high-system output region where both the generator 103 and the battery 104 must be used as power sources is referred to as a "hybrid region".

On the other hand, since a maximum output of the battery 104 is indicated by a solid line as an upper limit of the battery output, if an output operation point is located below the solid line, the motor 106 can be driven only with the electric power from the battery 104 in principle. However, since the driving of the generator 103 is assisted by the electric power from the battery 104 at the time of starting the engine 102, it is necessary to leave some reserve power in the battery 104. For this reason, when an output operation point is located in a margin region indicated by hatching below the solid line

<div align="center">16</div>

indicating an upper limit of the battery output, the motor 106 cannot be driven only by the battery 104, and only when an output operation point is located in an electric mode region indicated by a pattern of dots below the margin region, the motor 106 can be driven only by the battery 104. Note that the upper limit of the battery output indicated by the solid line varies depending on a battery charging rate and also varies depending on a temperature or a charged state of the battery, but only the relationship of the upper limit of the battery output with the battery charging rate is illustrated in FIG. 10 for simplification of description.

In the related art, in order to start the engine 102 at any timing, the margin indicated by hatching needs to be large, and as a result, the electric mode region, in which the vehicle 100 travels only by virtue of the battery 104, becomes narrow. In contrast, the present embodiment makes it possible to expand the electric mode region by suppressing the size of the margin depending on situation, and as a result, the number of times the engine 102 is started can be reduced to improve fuel efficiency. Hereinafter, the reasons why the number of times the engine 102 is started can be reduced to improve fuel efficiency according to the present embodiment will be sequentially described.

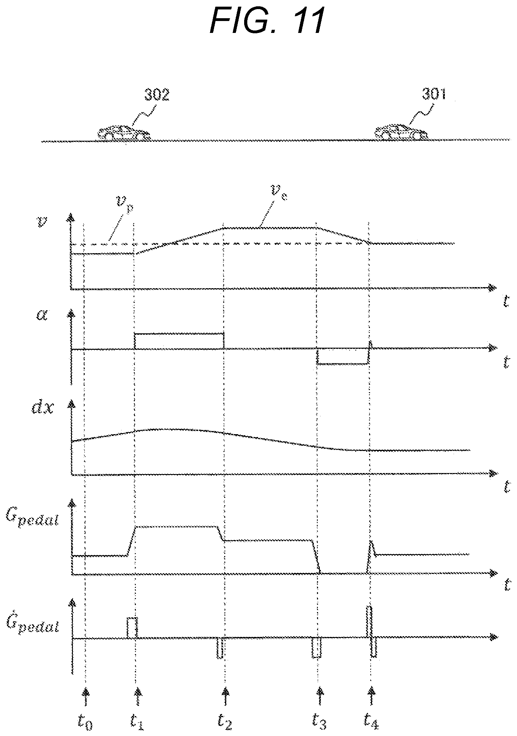

FIG. 11 illustrates an example of a scene where an own vehicle 302 on which the vehicle control device 10 according to the present embodiment is mounted travels following a preceding vehicle 301. The chart of FIG. 11 shows a change in speed, a change in acceleration, a change in intervehicle distance dx, a change in accelerator pedal operation amount, and a change in accelerator pedal operation speed in order from the upper side of the drawing. Concerning the change in speed, a change in speed ($v_p$) of the preceding vehicle 301 is indicated by a broken line, and a change in speed ($v_e$) of the own vehicle 302 is indicated by a solid line.

At a time $t_0$, the own vehicle 302 follows the preceding vehicle 301 traveling at a higher speed than the own vehicle. At a time $t_1$, since the intervehicle distance has increased, the own vehicle accelerates until a time $t_2$ to increase the speed. From a time $t_3$, since the intervehicle distance has decreased, the own vehicle decelerates. At a time $t_4$, the own vehicle follows the preceding vehicle 301 at the same speed as the preceding vehicle to maintain a predetermined intervehicle distance. Since the intervehicle distance increases from the time $t_0$ to the time $t_1$, it is expected that a driver of the own vehicle 302 is highly likely to step on the accelerator pedal at any timing to accelerate the own vehicle. At the time $t_4$, the own vehicle 302 changes a driving method to follow the preceding vehicle 301, and the accelerator is quickly operated, but a required driving force is smaller than that at the time $t_1$. This is because after the time $t_4$, the preceding vehicle 301 becomes an obstacle, and thus, it is not possible to increase a driving force and increase a speed.

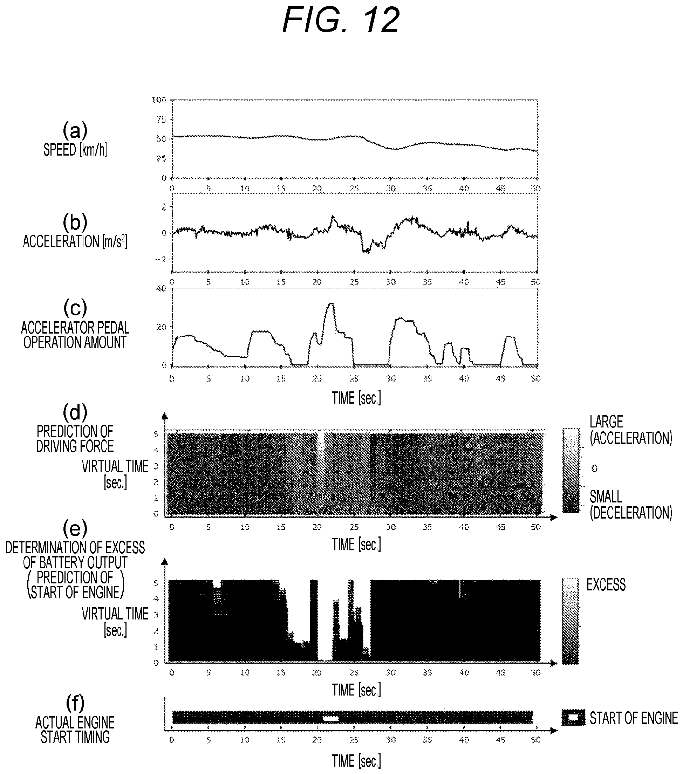

FIG. 12 visualizes a result of estimating a driving state by the driving state estimation unit 13 and a result of determining whether to start the engine 102 applicable to the driving plan generation unit 210 in correcting a driving plan, which are illustrated in FIG. 9, in such a scene.

FIG. 12 illustrates (a) a change in speed over time, (b) a change in acceleration over time, (c) a change in amount by which a driver operates the accelerator pedal over time, (d) a visualization result of a change in required driving force in the driving state estimation unit 13, (e) a visualization result of determining by the driving plan generation unit 210 whether the required driving force exceeds the battery output to be used for driving force distribution computation, and (f) an actual timing at which the engine 102 is started to increase the system output, in order from the top. The horizontal axis of (e) the visualization result of predicting the driving force indicates the same change on the real time axis over time as the change in speed over time and the like shown in (a) to (c), and the vertical axes of (d) and (e) indicate prediction in the virtual time direction at each real time (change in future driving force). Note that FIG. 12(d) is read in a similar way to FIG. 6A(c).

In the determination of the excess of the battery output of FIG. 12(e), a region predicted to need to start the engine to increase the motor output because of an increase in system output is indicated in white on the basis of the result of the prediction performed by the driving state estimation unit 303. A black region indicates a region where the vehicle can travel only with the output of the battery.

FIG. 12(f) illustrates a timing at which the engine is started between a series of operations illustrated in FIG. 12. In this example, the engine is started in about 20 to 25 seconds, and the engine 102 is then operated for a predetermined period of time to support the motor output and charge the battery.

In (c) of this example, the accelerator pedal operation amount decreases from about 15 seconds, and the driver does not seem to require a driving force at a glance, but after that, it is shown that the driver steps on the accelerator for re-acceleration in about 20 seconds. According to (d) the result of the prediction performed by the driving state estimation unit 303, a light-color region appears from around 15 seconds, and it can be predicted that the driver will require a driving force in the acceleration direction. In addition, (e) the determination of the excess of the battery output is performed in about 15 seconds, that is, about 5 seconds before the required driving force exceeds the battery output and the engine needs to be started, and it is predicted at a time closer to about 20 seconds that the engine needs to be started.

On the other hand, in (d) the result of estimating the requested driving force, it is predicted that dark color and intermediate color will be distributed in about 30 seconds, indicating that the vehicle can travel only with the output of the battery. As described above, in the vehicle control device 10 according to the present embodiment, by extracting driving characteristics and performing prediction based on the extracted driving characteristics, a driving force can be distributed based on the driving characteristics before an actual engine start timing comes.

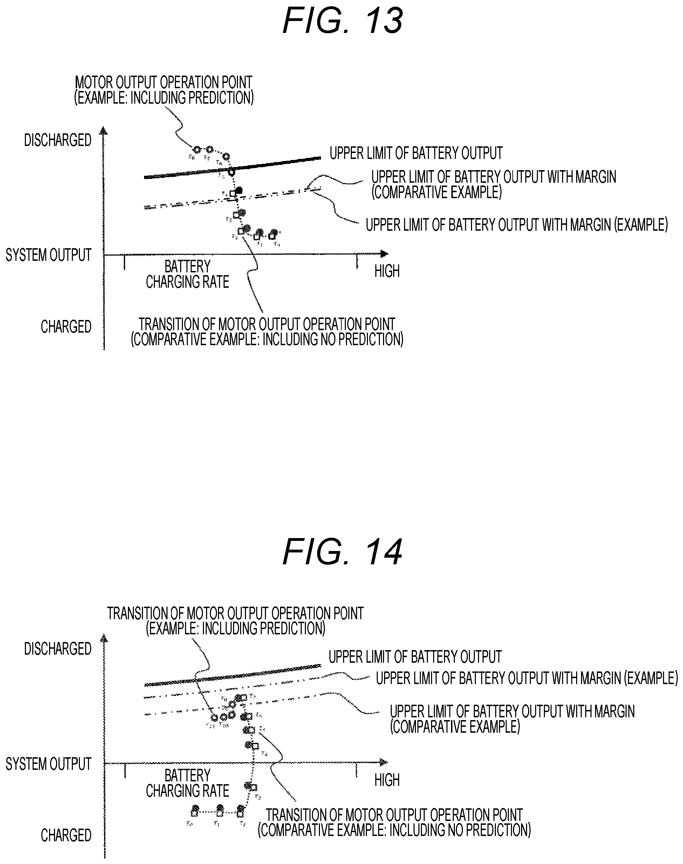

These processes are schematically illustrated in terms of system output in FIGS. 13 and 14.

FIG. 13 schematically illustrates a change in system output in an acceleration scene shown at time $t_1$ in FIG. 11 and in about 20 seconds in FIG. 12. In FIG. 13, a plot is illustrated for each time $\tau_*$, and an output point transitions from time $\tau_0$ to time $\tau_8$, while the comparative example is illustrated by white-square plots and the present example is illustrated by black-circle and white-circle plots. From the time $\tau_0$ to the time $\tau_4$, actual changes in output are shown, and plots exist in both the comparative example and the present example. Since the comparative example does not have the prediction function as in the present embodiment, there is no plot after the time $\tau_4$ and an change in output cannot be predicted. Thus, a request for an output exceeding a margin is generated at the time $\tau_4$, and accordingly, the engine 102 is started to increase electric power supplied to the motor.

Similarly, in the present embodiment, it is predicted that an output exceeding the battery output will be required even though a change in output can be predicted, and accordingly, the engine 102 is started without changing the margin from its position in the comparative example. Alternatively, the output margin may increase at a time when it can be predicted that the required output will exceed the battery output as described above, such that and the engine 102 is started early. However, the farther future prediction is performed for, the more uncertain the prediction is. Therefore, there is rather a possibility that the number of times the engine is start increases. For this reason, in this example, in a state where a request for an output exceeding the battery output can be predicted, a margin is not cut, and a control is performed similarly to that in the comparative example.

FIG. 14 schematically illustrates a change in system output in an acceleration scene shown at time $\tau_4$ in FIG. 11 and in about 30 seconds in FIG. 12, while a comparative example is illustrated by white-square plots and a present example is illustrated by black-circle and white-circle plots similarly to FIG. 13. In this example, at time $\tau_7$ in the comparative example, since a further change in output cannot be predicted, it is determined that an output exceeding a margin region is required, and the engine 102 is started. On the other hand, in the present example, since it can be predicted that there will be no request for system output from the time $\tau_7$ to time $\tau_{11}$, the margin is cut to narrow the margin region as indicated by a two-dot chain line in FIG. 14, thereby expanding the electric mode region. As a result, in the present example, the vehicle can travel only with the output of the battery without starting the engine, and the unnecessary starting of the engine 102 can be suppressed, thereby improving fuel efficiency.

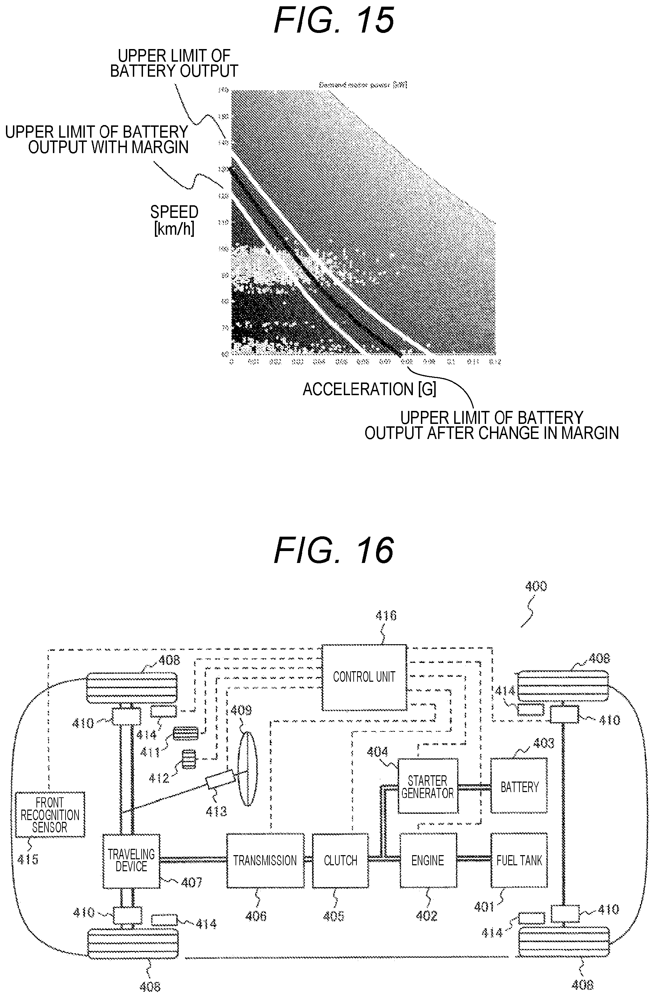

FIG. 15 illustrates such an output margin and distribution of actually measured output points. In FIG. 15, the horizontal axis represents an acceleration in a speed increase direction, and the vertical axis represents an own vehicle speed $v_e$. The gradation in the drawing indicates the distribution of the system output, and a lighter color means that a higher output is required. A white region on the upper right side of the drawing is in a range exceeding the designed system output, and an output in that region cannot be actually realized. In addition, a large number of plots indicated by gray squares indicate distribution of actually measured operation points.

Among solid lines illustrated in FIG. 15, the leftmost and lowermost one indicates a boundary of the system output for starting the engine in a state where a battery output margin is set. As the battery output margin is smaller (lower output) using the margin control according to the present embodiment, the boundary line moves further in the upper right direction. The rightmost one of the solid lines in the drawing indicates a maximum value of the system output at which the vehicle can travel in a state where all of the margin is cut.

Therefore, by changing a margin cut amount according to the margin control of the present embodiment, a boundary line indicated as a black solid line in the middle moves, and the vehicle can travel only with the battery output with respect to an operation point located on the left side of the boundary line and lower than the boundary line. When it is determined that the traveling in the electric mode can be continued with the required driving force by decreasing the above-described output margin on the basis of the prediction of the output of the motor 106 estimated according to the driving force to be required in the future, a travel planning unit 304 transmits a request for correction to reduce the output margin to the driving force distribution computation unit 202 so that the electric mode can be continued. Based on this request, the driving force distribution computation unit 202 changes the distribution of the driving force to realize all of the required driving force only with electric power from the battery 104, for preparation not to start the engine 102.

In the second embodiment, the above-described feature makes it possible to predict a driving force required by the driver for the vehicle 100 at a certain time in the future for better determination, thereby suppressing the unnecessary starting of the engine and suppressing a deterioration in fuel efficiency of the vehicle 100. That is, the unnecessary starting of the engine 102 can be suppressed based on driver's driving characteristics to reduce fuel consumption, and furthermore improve the fuel efficiency of the vehicle 100.

In FIG. 7 of the present embodiment, the series hybrid electric vehicle in which the vehicle is driven only with the driving force of the motor is taken as an example, but the present invention is not necessarily limited thereto, and a series-parallel hybrid electric vehicle or a split hybrid electric vehicle including an EV mode in which the vehicle is driven only with electric power and an HEV mode in which the vehicle is driven with power from both the motor and the engine may be used.

[Third Embodiment]

Next, a third embodiment of the present invention will be described with reference to FIGS. 16 to 19. Note that redundant description of common points shared with the above-described embodiments will be omitted.

In the third embodiment, the vehicle 100 of the second embodiment is replaced with a vehicle 400 using an engine as a main power source. FIG. 16 is a schematic diagram of the vehicle 400. The vehicle 400 includes an engine 402 that converts chemical energy of fuel accumulated in a fuel tank 401 into power, and a starter generator 404 that is driven by the engine 402 to generate power or starts the engine 402 with electric power of a battery 403.

The power generated by the engine 402 is transmitted to wheels 408 from a transmission 406 or a traveling device 407 including an operation mechanism or the like, through a clutch 405 that can be controlled in a state where all or some of the power is transmitted or in a state where all or some of the power is not transmitted, to accelerate the vehicle 400, turn the vehicle 400 using a steering device 409, and decelerate the vehicle 400 using brake actuators 410, such that running, turning, and stopping are realized similarly to the vehicle 100. Similarly to the vehicle 100, a driver's request is detected through an accelerator pedal 411, a brake pedal 412, and a steering angle sensor 413. In addition, a state of the own vehicle, a state of the surrounding environment, and the like are detected by wheel speed sensors 414 and a front recognition sensor 415, and these are processed by a control unit 416.

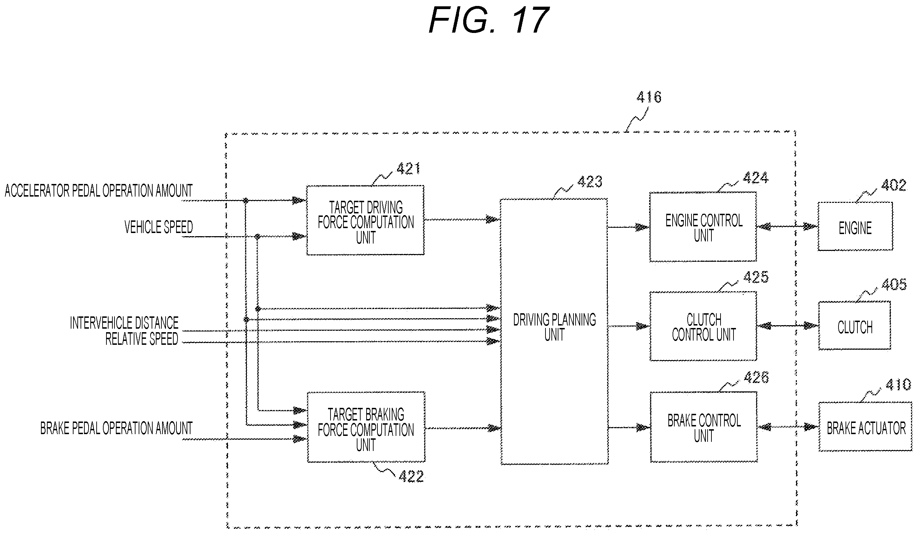

A configuration of the control unit 416 is illustrated in FIG. 17. The control unit 416 of the present embodiment has a configuration in which a component (a clutch control unit 425) specific to a vehicle using an engine as a main power source is added while the components (the driving force distribution computation unit 202 and the braking force distribution computation unit 207) specific to the hybrid electric vehicle are omitted as compared with the control unit 1 of the second embodiment illustrated in FIG. 8. Specifically, the control unit 416 includes a target driving force computation unit 421 that computes an acceleration and a driving force generated in the vehicle 400 on the basis of an accelerator pedal operation amount and a speed of the vehicle 400, a target braking force computation unit 422 that computes a braking force of the vehicle 400 on the basis of an accelerator pedal operation amount, a speed of the vehicle 400, and a brake pedal operation amount, a driving planning unit 423 that is a feature of the present embodiment, an engine control unit 424 that controls the engine 402 to accelerate the vehicle according to a command from the driving planning unit 423, a clutch control unit 425 that controls a state of the clutch 405 according to a command from the driving planning unit 423, and a brake control unit 426 that controls the brake actuators 410 according to a command from the driving planning unit 423.

The driving planning unit 423 is different from the driving planning unit 209 of FIG. 9 only in commands input to and output from a functional block corresponding to the driving plan generation unit 210 illustrated in FIG. 9, and thus illustration thereof is omitted.

By applying the driving plan generation method of the second embodiment, even in the vehicle 400 using the engine as a main power source, the operation states of the engine 402, the clutch 405, and the brake actuators 410 change according to commands issued by the driving planning unit 423 to the engine control unit 424, the clutch control unit 425, and the brake control unit 426, respectively. This will be described in detail.

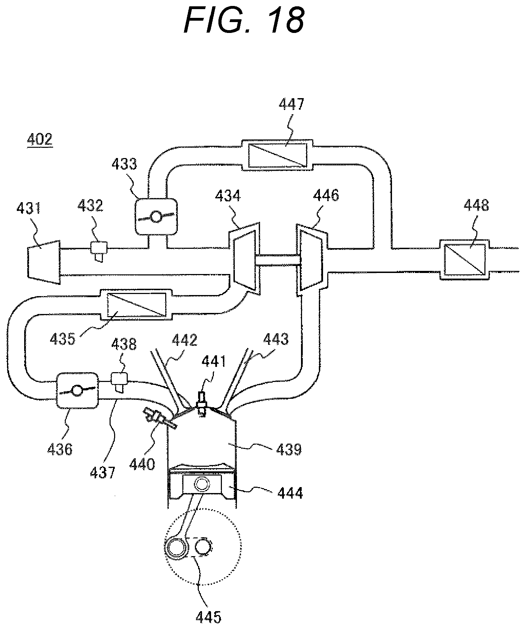

FIG. 18 schematically illustrates the engine 402 of the vehicle 400. Air sucked by an air cleaner 431 is measured by an air mass flow sensor 432. Thereafter, exhaust gas having passed through a low-pressure EGR valve 433 is mixed with the sucked air, and the air-fuel mixture is compressed by a compressor 434. The compressed air-fuel mixture is cooled by an intercooler 435 and regulated by a throttle valve 436.

An intake manifold 437 is provided downstream of the throttle valve 436, and a manifold pressure is measured by a manifold pressure sensor 438. The air mass flow sensor 432 and the manifold pressure sensor 438 measure an amount of fresh air flowing into a combustion chamber 439 to adjust a timing for injecting fuel using a fuel injection valve 440 and igniting the fuel using an ignition plug 441, thereby realizing a desired output.

The amount of fresh air introduced into the combustion chamber 439 is realized not only by changing an opened degree of the throttle valve 436, but also by changing a phase of a cam, which is not illustrated, or similarly, changing a phase of the exhaust valve 443, or changing a lift amount of the intake valve 442 or the exhaust valve 443, or the like for changing an opened degree of the low-pressure EGR valve 433, a supercharging pressure realized by the compressor 434, or an opened/closed period of an intake valve 442.

Fuel is supplied through the fuel injection valve 440 in accordance with an amount of oxygen contained in the fresh air introduced into the combustion chamber 439 to form mixed gas, and the mixture of oxygen and fuel is ignited by sparks from the ignition plug 441, and a piston 444 is pushed down to cause the crank mechanism 445 to produce a rotational force by increasing a pressure in the combustion chamber 439.

Conversely, the piston 444 is pulled down by the rotational force from the crank mechanism to lower the pressure in the combustion chamber 439 such that fresh air is sucked into the combustion chamber. After the combustion, exhaust gas is scavenged by lifting the exhaust valve 443 to open the exhaust valve and push up the piston 444. By subjecting the scavenged exhaust gas accompanied by pressure and heat to be hit by the turbine 446, the compressor 434 is driven. In addition, some of the exhaust gas is cooled by passing through the EGR cooler 447 as described above, and then regulated by the low-pressure EGR valve 433 to be recirculated to the intake side.

For the remaining exhaust gas, non-combusted fuel and harmful substances generated due to incomplete combustion in the process of combustion are removed by a catalyst converter 448, and the purified exhaust gas is discharged from a tail pipe through a muffling mechanism, which is not illustrated.

Although simple, the engine 402 including a supercharger and a low-pressure EGR mounted on the vehicle 400 has been described.

In order for the engine 402 to realize a desired output, an amount of fresh air is regulated together with fuel to be supplied by a plurality of methods as described above. The method using the throttle valve 436 and the intake valve 442 is close to the combustion chamber 439 in terms of positional relationship as illustrated in FIG. 18, making it possible to cope with a rapid change in output response.

On the other hand, when a low output is realized by the throttle valve 436, it is assumed that an amount of air flowing into the combustion chamber is reduced by narrowing the throttle valve 436. However, in this case, since a pressure in the intake manifold 437 is negative with respect to the atmospheric pressure, a loss occurs due to a pressure difference when fresh air is sucked by lowering the piston 444. Therefore, the efficiency of the engine 402 decreases, resulting in a deterioration in fuel efficiency.

On the other hand, the engine 402 can also be operated at a low output by increasing an opened degree of the low-pressure EGR valve 433 to increase an amount of recirculating exhaust gas and reduce an amount of oxygen contained in fresh air. Since oxygen is consumed during combustion, exhaust gas is inert with respect to intake air taken in from external air. By mixing the exhaust gas and the external air, an oxygen concentration relatively decreases, that is, an amount of oxygen decreases. Thus, the engine 402 can be operated at a low output by regulating an amount of EGR.

However, as shown in FIG. 18, the recirculation of the exhaust gas is a control method that is inferior in terms of responsiveness because there is a time difference until the exhaust gas flowing along a detour route reaches the combustion chamber 439. In addition, in a case where the engine 402 is a multi-cylinder engine including a plurality of combustion chambers 439, it is also possible to control its output by changing the number of combustion cylinders.

By reducing the number of combustion cylinders, an amount of exhaust gas apparently decreases, and an amount of intake air per cylinder required for realizing the same output increases. As a result, it is possible to reduce an output of the engine 402 even in a state where a pressure in the intake manifold 437 is high while keeping the throttle valve 436 open. However, this method is a control method that is also inferior in terms of responsiveness, because the generated output changes stepwise according to the number of combustion cylinders, and thus, it is difficult to cope with continuous changes in output. In addition, it is concerned that discarding sucked fresh air as exhaust gas without combusting the fresh air may lead to damage to the catalyst converter 448 by fire. As a measure for avoiding this problem, a lift amount of an intake valve 442 of a cylinder where combustion is not performed may be set to 0.

Conversely, when the engine 402 is operated at a high output, it is necessary to increase an amount of fresh air, and the engine 402 takes measures to increase a supercharging pressure. By increasing the supercharging pressure, the fresh air can be compressed to increase an amount of oxygen that can be introduced into the combustion chamber 439 of the engine 402. Since the compressor 434 is driven by energy from the turbine 446 as described above, the supercharging pressure that can be increased by the compressor 434 is low until recovering work performed by the turbine 446 increases, and a response delay occurs in the form of a so-called turbo lag.

That is, such an output control by EGR and an output control method involving an increase in supercharging pressure require a preparation control considering a response delay of the engine 402 in order to realize the required output of the engine 402 with good fuel efficiency.

In a case where a low-load operation of the engine 402 is realized based on an opened degree of the low-pressure EGR valve 433, when a high output is required, for example, for accelerating the vehicle 400, it is necessary to discard the EGR flowing into the intake manifold 437 as exhaust gas at the time of combustion after closing the low-pressure EGR valve 433. Therefore, it is possible to perform EGR without sacrificing responsiveness by preparing for driving while closing the low-pressure EGR valve 433 at a time point when it is predicted that a high output will be required during the low-load operation.

In this way, in a case where it is necessary to increase an output of the engine 402, an opened degree of the EGR valve is corrected to close the valve and a correction for reducing EGR is performed as preparation for driving at a time point when it is predicted that a high output will be required, thereby preventing an occurrence of a response delay during which the output of the engine 402 cannot be increased until the EGR is scavenged even though it is required to increase an output of the engine 402.

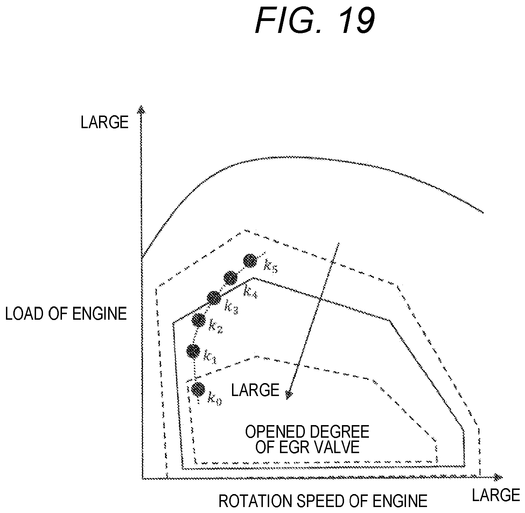

As illustrated in FIG. 4, the driving state estimation unit 13 predicts a future change in speed of the own vehicle in addition to a driving force state of the own vehicle. By predicting them, a future rotation speed of the engine 402 and a further driving force of the engine 402, that is, a further load state, are estimated. For example, when the rotation speed of the engine and the load of the engine are set as illustrated in FIG. 19, the driving state estimation unit can predict that the driving state of the engine 402 shifts from time $k_0$ to $k_5$ on a map where a target opened degree of the EGR valve is set. Thus, by predicting a future target opened degree of the EGR valve, the opened degree of the EGR valve can be changed in advance as preparation for driving. As described above, the rotation speed of the engine can be predicted through calculation based on information such as a speed of the vehicle 400, specifications of the wheels 408, transmission ratios from the traveling device 407 to the clutch 405, etc. Like the calculation of the torque required for the motor 106 in the process of obtaining electric power of the motor 106, a torque required for the engine 402 can be calculated on the basis of a speed of the vehicle 400, an acceleration to be required by the driver, etc.

Note that, although an otto cycle gasoline engine is illustrated in FIG. 18 of the present embodiment, the engine type is not limited thereto, and may be a diesel engine. In addition, the number of cylinders is not limited. Furthermore, the engine is not limited to a reciprocating engine in which a reciprocating motion of the piston is converted into electric power by the crank mechanism, and may be a Wankel type rotary engine.

[Fourth Embodiment]

Next, a fourth embodiment of the present invention will be described. Note that redundant description of common points shared with the above-described embodiments will be omitted.

The fourth embodiment is capable of resolving a response delay of the engine 402 when the output of the engine 402 is increased by the supercharger illustrated in FIG. 18. Specifically, when it is necessary to increase a supercharging pressure to further increase the output of the engine, a waist gate valve can be closed to increase the supercharging pressure at a time point when it is predicted that the high output will be required as preparation for driving, by using a vehicle control device further including a driving plan generation unit that generates a vehicle driving plan on the basis of a result of predicting a driving state of an own vehicle estimated by the driving state estimation unit, the own vehicle being a vehicle using an engine including a supercharger as a main driving power source, characterized in that the preparation for driving involving a correction for increasing the supercharging pressure is performed when the driving state estimated by the driving state estimation unit is a driving state in which the vehicle transitions to acceleration.

It is not preferable to suppress a response delay by keeping a high supercharging pressure at all times, because unnecessary work is performed by the turbine 446, resulting in a decrease in efficiency of the engine 402 in the form of an increase in exhaust loss. In addition, it cannot be said that there is always a sufficient amount of exhaust gas, and supercharging cannot be maintained if the engine 402 continues to be operated in a low-load region.

In the fourth embodiment, since the supercharging pressure of the engine 402 is increased by the compressor 434 when a required output of the engine 402 is predicted, when the engine 402 is not operated at a high output, the supercharging pressure of the engine 402 is decreased, thereby reducing not only work of the compressor 434 and but also work of the turbine 446. As a result, it is possible to suppress an increase in exhaust loss of the engine 402 and suppress a decrease in thermal efficiency of the engine 402, and accordingly, it is possible to suppress a response delay caused by an increase in output of the engine 402, that is, a so-called turbo lag, while suppressing a deterioration in fuel efficiency of the vehicle 400.

Basically, it is preferable to increase a target supercharging pressure when it is predicted that the target supercharging pressure will be increased based on how a driving state of the engine 402 transitions on a map for determining a target supercharging pressure with respect to a rotation speed and a load of the engine 402, such as a target opened degree of the EGR valve with respect to the rotation speed and the load of the engine 402 illustrated in FIG. 19, on the basis of the driving state estimated by the driving state estimation unit.

[Fifth Embodiment]

Next, a fifth embodiment of the present invention will be described. Note that redundant description of common points shared with the above-described embodiments will be omitted.

The fifth embodiment of the present invention relates to the operation of the clutch control unit 425 illustrated in FIG. 17. In a case where the vehicle 400 (the own vehicle 302) reduces an intervehicle distance dx at a higher speed than the preceding vehicle 301 as in the period from time $t_2$ to $t_3$ in FIG. 11, the clutch control unit 425 controls the clutch 405 to release its engaged state. By doing so, when the vehicle 400 approaches the preceding vehicle 301, the vehicle 400 travels by coasting, thereby reducing a workload of the engine 402 for maintaining the speed of the vehicle 400.

In the situation as illustrated in FIG. 11, since the driving state estimation unit 13 predicts states of the own vehicle 302 and the preceding vehicle 301, it is possible to predict that the own vehicle 302 continues to follow the preceding vehicle 301, that the own vehicle 302 almost catches up with the preceding vehicle 301, and that the driver decelerates the own vehicle 302 to avoid a rear-end collision.

Therefore, since it is predicted that it is not necessary to accelerate the own vehicle 302 during this period, the vehicle 400 can perform preparation for driving so as to release the transmission of the driving force of the clutch 405.

On the other hand, when the preceding vehicle 301 accelerates, and the intervehicle distance from the own vehicle 302 increases, since it is predicted by the driving state estimation unit that the driver will want acceleration, and the driving state will transition to accelerate the vehicle 400, the driving force of the vehicle 400 can be recovered by bringing the clutch 405 into the engaged state again.

When the clutch 405 of the vehicle 400 is in a disengaged state, the engine 402 is in a standby operation state. in this state, since a travel resistance caused when the vehicle 400 travels is not a load of the engine 402, the work of the engine 402 can be reduced, and accordingly, the fuel consumption of the engine 402 can be reduced. As a result, the fuel efficiency of the vehicle 400 can be improved.

[Sixth Embodiment]

Next, a sixth embodiment of the present invention will be described. Note that redundant description of common points shared with the above-described embodiments will be omitted.

The sixth embodiment of the present invention is an improvement of the fifth embodiment. In the sixth embodiment, when the own vehicle 302 (the vehicle 400) is approaching the preceding vehicle 301 as shown in FIG. 11, not only the power transmission of the clutch 405 shown in FIGS. 16 and 17 is brought into a disengaged state as in the fifth embodiment, but also the engine 402 is stopped. As a result, it is possible to expect a further reduction in fuel consumption by stopping the engine 402 as compared with the fifth embodiment in which the clutch 405 is simply brought into the released state.

[Seventh Embodiment]

Next, a seventh embodiment of the present invention will be described. Note that redundant description of common points shared with the above-described embodiments will be omitted.

The seventh embodiment of the present invention is an improvement of the sixth embodiment. In the seventh embodiment, the engine 402 is restarted when the driving state estimation unit 13 estimates a driving state in which the vehicle 400 accelerates while the vehicle 400 is following the preceding vehicle 301 in a state where the engine 402 is stopped.

The driver may not operate the accelerator pedal or the brake pedal while the own vehicle 302 is approaching the preceding vehicle 301. If the engine 402 is restarted when the accelerator pedal or the brake pedal is operated, the power transmission through the clutch 405 cannot be resumed until a rotation speed of the engine 402 matches rotation speeds of the wheels 408 of the vehicle 400, the traveling device 407, the transmission 406, and the clutch 405, or until a difference in rotation speed therebetween becomes small, that is, a response delay occurs.

Therefore, in the seventh embodiment, the engine 402 is restarted when the driving state estimation unit 13 estimates a driving state in which the vehicle 400 accelerates while the engine 402 is stopped according to the sixth embodiment. As a result, even when a driver's request cannot be obtained through the accelerator pedal, the brake pedal, or the like, the engine 402 can be restarted, that is, the response delay of the engine 402 can be reduced, and the power transmission through the clutch 405 can be resumed.

On the other hand, when the preceding vehicle 301 performs sudden braking or the like while the own vehicle 302 is approaching the preceding vehicle 301, a braking force may be further required. In this case, the driver operates the brake pedal to operate the brake actuators 410. For the purpose of increasing a pedal force, a brake booster device, which is not illustrated, is provided in the vehicle 400.

The brake booster device is generally operated by a pressure difference between the intake manifold 437 and external air generated when the engine 402 is operated at a low load, and at least the engine 402 needs to be operated in order to generate the pressure difference.

Therefore, in the seventh embodiment, the engine 402 is restarted even when the driving state estimated by the driving state estimation unit 13 transitions to further decelerate the vehicle 400.

As a result, when a large braking force is required, for example, because of sudden braking of the preceding vehicle 301 while the own vehicle 302 is approaching the preceding vehicle 301, the engine 402 can be started to obtain a pressure difference between the intake manifold 437 and external air necessary for driving the brake booster device, which is not illustrated.

[Eighth Embodiment]

Next, an eighth embodiment of the present invention will be described. Note that redundant description of common points shared with the above-described embodiments will be omitted.

The eighth embodiment of the present invention relates to the operation of the brake control unit 426 illustrated in FIG. 17. In a case where the vehicle 400 (the own vehicle 302) decelerates as in the period from time $t_3$ to $t_4$ in FIG. 11, while the brake control unit 426 corrects a braking force realized by the brake actuators 410 in a decreasing direction, the clutch control unit 425 maintains the clutch 405 in the engaged state to control a target power generation voltage of the starter generator 404 in an increasing direction.

The starter generator 404 is driven to generate power using a driving force generated by the engine 402 depending on whether the starter generator is provided between the engine 402 and the clutch 405 or the starter generator is belt-driven by the engine 402 and a winding transmission mechanism, and a rotational force generated when the engine 402 is taken through the traveling device 407, the transmission 406, and the clutch 405 with kinetic energy caused when the vehicle 400 travels. The braking force acts by driving the engine to generate power as described above, but the fuel efficiency of the vehicle 400 can be improved by recovering the kinetic energy of the vehicle 400 as electric power using the starter generator. The driving planning unit 423 outputs a command to distribute a target braking force computed by the target braking force computation unit 422 to a braking force to be caused when the starter generator 404 generates power and a braking force realized by controlling the brake actuators 410.

In order to drive the starter generator 404 to generate power, the clutch 405 is brought into the engaged state through the clutch control unit 425. In the present embodiment, a measure for increasing a target power generation voltage of the starter generator 404 are additionally taken as preparation for driving, for example, by increasing a field winding current, which is not illustrated, of the starter generator 404.

By doing so, the kinetic energy of the vehicle 400 can be regenerated as electric power. The starter generator 404 makes it possible to reduce occasions when the vehicle 400 performs power generation by driving the engine 402, which is accompanied by fuel consumption. By reducing an amount of fuel consumed for power generation, it is possible to suppress a deterioration in fuel efficiency of the vehicle 400.

Note that, although the starter generator 404 capable of starting the engine 402 and generating power when driven to rotate by the engine 402 or the inertial force of the vehicle 400 is taken as an example in the eighth embodiment, even in a vehicle having a configuration in which a starter motor for starting the engine 402 and an alternator for generating power are separately provided, the power generation of the alternator can be performed based on regeneration of kinetic energy of the vehicle 400, thereby obtaining the same effect. Therefore, the starter generator 404 is not limited thereto, and may include an alternator and a starter motor.

[Ninth Embodiment]

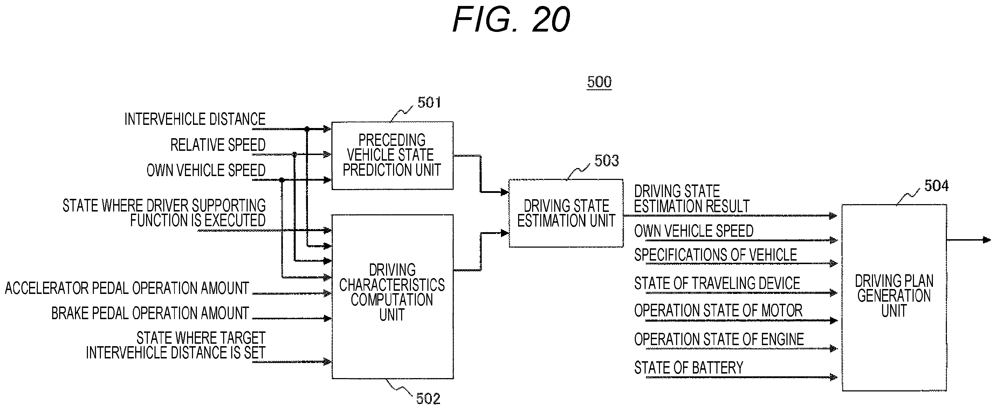

Next, a ninth embodiment of the present invention will be described with reference to FIG. 20. Note that redundant description of common points shared with the above-described embodiments will be omitted.

In the above-described embodiments, the driving characteristic computation unit 12 computes driving characteristic parameters θ on the basis of driver's driving characteristics. However, in the ninth embodiment of the present invention, characteristics of a constant-speed intervehicle distance follow-up control system, which is a type of automatic driving system, are reflected in computation by a driving characteristic computation unit 502.

FIG. 20 is a block diagram of a driving planning unit 500 in the present embodiment. A preceding vehicle state prediction unit 501 is equivalent to the preceding vehicle state prediction unit 11 in FIG. 1, and a driving state estimation unit 503 is also equivalent to the driving state estimation unit 13 in FIG. 1.

The characteristics of the constant-speed intervehicle distance follow-up control (a technology called adaptive cruise control or ACC) are reflected in the driving characteristic computation unit 502 according to the present embodiment. In the constant-speed intervehicle distance follow-up control, when there is no preceding vehicle ahead and any risk of collision is not recognized, a vehicle is accelerated to maintain an upper limit speed set by a driver or an upper limit speed of a speed limit of a road acquired by the front recognition sensor 115.

On the other hand, when a vehicle (preceding vehicle) preceding an own vehicle is detected and the own vehicle travels at a speed smaller than the above-described speed, the own vehicle travels to maintain a predetermined intervehicle distance in order to avoid a collision. Such an intervehicle distance is adjusted so that an intervehicle time obtained by dividing the intervehicle distance between the preceding vehicle and the own vehicle by a speed of the own vehicle is constant in a range of about 0.5 seconds to 5 seconds.

During the execution of the constant-speed intervehicle distance follow-up control, the driver selects an intervehicle distance with respect to the preceding vehicle to correspond to a driver's driving sense or to have less psychological burden, from among three levels including short, medium, and long, or more levels.

In the constant-speed intervehicle distance follow-up control, a target acceleration of the own vehicle is determined based on an intervehicle distance and a relative speed dv (or a relative acceleration) as in the following formula. Thus, the driving characteristic computation unit 502 selects driving characteristic parameters θ designed in advance according to a setting state of a target intervehicle distance selected by the driver.

[Mathematical formula 27]

$$\alpha_{contorl}(\tau_n) = f(dx(\tau_n), dv(\tau_n), v_e(\tau_n))$$

Formula 27

In the constant-speed intervehicle distance follow-up control, since an acceleration $\alpha_{contorl}(\tau_n)$ is determined on the basis of a relative relationship between the own vehicle and the preceding vehicle and a state of the own vehicle as shown in Formula 27. Thus, by replacing a result of calculating driving characteristics with specifications for designing the constant-speed intervehicle distance follow-up control, the driving state estimation unit 503 can estimate a driving force to be required in the future, and the driving plan generation unit 504 can appropriately correct a driving plan. If the vehicle is a series hybrid electric vehicle such as the vehicle 100, distribution of its driving force or braking force is changed. Even if the vehicle is a vehicle using an engine as a main driving power source such as the vehicle 400, the driving planning unit 500 can output a command to improve the fuel efficiency of the vehicle.

That is, in the ninth embodiment, in a case where the vehicle has a constant-speed intervehicle distance follow-up control function or a function equivalent thereto, the driving characteristic computation unit 502 changes driving characteristic parameters to be output to the driving state estimation unit according to a setting state of a target intervehicle distance.

By doing so, even in a case where the vehicle is driven by the automatic driving system, the driving planning unit 500 can suppress a deterioration in fuel efficiency of the vehicle, similarly to the case where the vehicle is driven by the driver.

In addition, in the ninth embodiment, the invention can be realized by switching the driving characteristic parameters regardless of whether the vehicle is driven by the driver or the driving support function is executed.

By doing so, even when the acceleration/deceleration of the vehicle is controlled by the driving assistance system, the fuel efficiency of the vehicle can be improved.

[Tenth Embodiment]

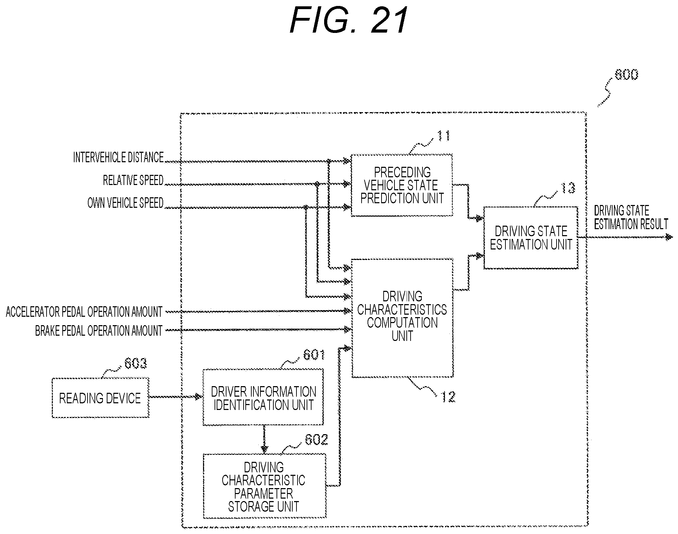

Next, a tenth embodiment of the present invention will be described with reference to FIG. 21. Note that redundant description of common points shared with the above-described embodiments will be omitted.

The tenth embodiment of the present invention relates to a method for acquiring the driving characteristic parameters $\theta$ obtained in the first embodiment in a short time. The first embodiment has a problem that, in order for the driving characteristic computation unit 12 to collect various pieces of information required for computing driving characteristic parameters $\theta$ after driving is started, it takes several minutes to determine driving characteristic parameters $\theta$ corresponding to a current driver, and during this period, improvement of fuel efficiency is not realized.

In order to solve this problem, a vehicle control device 600 according to the tenth embodiment illustrated in FIG. 21 further includes a driver information identification unit 601 and a driving characteristic parameter storage unit 602. In addition, the driver information identification unit 601 transmits and receives information to and from a reading device 603 provided outside the vehicle control device 600 in the vehicle.

The reading device 603, which is a device that acquires information for identifying a driver, is installed, for example, around a driver's seat in the vehicle or in the interior of the vehicle where a speedometer, an infotainment device, etc. are installed. The driver information identification unit 601 can specify who the current driver is by causing the driver to place a card or a driver's license provided with an IC chip or the like, a smartphone, or a microchip embedded in a body of the driver on the reading device 603, or by causing the reading device 603 to read biometric information such as a fingerprint, a vein, a retina, a face, or a voiceprint. The reading device 603 may be a non-contact type detector, may be a device such as a touch panel, a camera, or a microphone, or may be substituted by another method in which a password or a personal identification number is input through the above-described infotainment device.

The driving characteristic parameter storage unit 602 stores the driving characteristic parameters $\theta$ calculated by the driving characteristic computation unit 12 and the driver identification information generated by the driver information identification unit 601 in association with each other, develops corresponding driving characteristic parameters in the driving characteristic computation unit 12 on the basis of a driver identification result, and immediately reflects the corresponding driving characteristic parameters as driving characteristic parameters $\theta$.

By doing so, even when the vehicle is driven by a plurality of drivers, driving characteristic parameters can be reflected in the vehicle in a short time.

[Eleventh Embodiment]

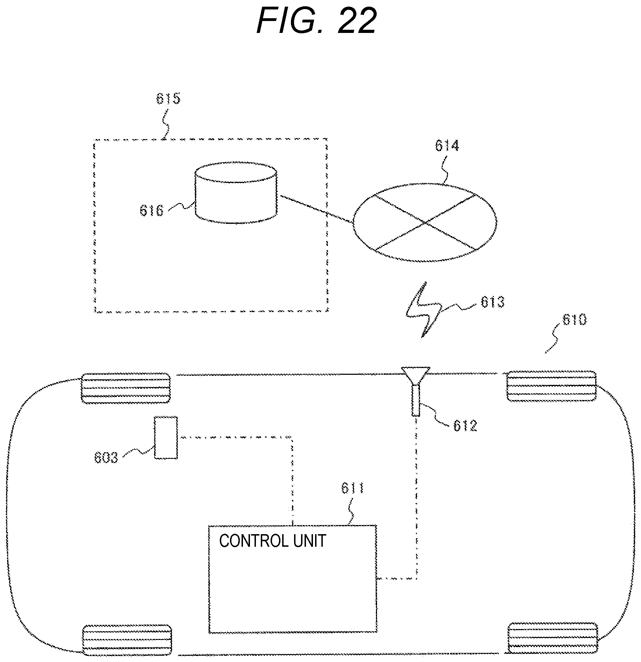

Next, an eleventh embodiment of the present invention will be described with reference to FIG. 22. Note that redundant description of common points shared with the above-described embodiments will be omitted.

FIG. 21, which is a diagram for explaining the eleventh embodiment of the present invention, illustrates an example in which the driver information identification unit 601 and the driving characteristic parameter storage unit 602 in the tenth embodiment are provided in a place other than a vehicle 610 (for example, on a cloud).

A control unit 611 on which the vehicle control device according to the present embodiment is mounted is provided in the vehicle 610, and is connected to the reading device 603 for acquiring driver identification information and a communication module 612.

The communication module 612 can transmit and receive information to and from a data center 615 via a mobile phone network 613 or the Internet 614. The driver identification information read by the reading device 603 is transmitted to the data center 615 via the control unit 611 and the communication module 612, and the data center 615 reads driving characteristic parameters stored in a storage 616 managed in the data center 615. The driver information identification unit 601 and the driving characteristic parameter storage unit 602 in the tenth embodiment are replaced by the functions of the data center 615 and the storage 616.

By doing so, even if the driver has never driven the vehicle 610, driving characteristic parameters θ generated when the driver has driven another vehicle can be reflected in the vehicle 610.

Driving characteristic parameters θ created or updated during driving at this time may be updated in the storage 616 of the data center 615 via the communication module 612 when the driving of the vehicle 610 is completed or every predetermined time interval.

By shortening the update interval, the driving characteristic parameters can be corrected in a short time. Alternatively, by performing updating at a time point when the vehicle completes driving, costs required for communication can be reduced. Alternatively, updating may be performed whenever it is predicted that driving characteristic parameters can be acquired in various scenes, for example, when the vehicle passes through a point where there is no travel track record, rather than every predetermined time or every time driving is completed.

The examples of the preferred embodiments of the present invention has been described above. In the embodiments of the present invention and the drawings used for the description thereof, only configurations necessary for the description of the invention are described. When the invention is actually implemented, controls and functions that are not described in the embodiments of the present invention can be achieved using conventionally known techniques. Therefore, the present invention does not necessarily include all the configurations described above, and is not limited to the configurations of the embodiments described above. Some of the configurations of one embodiment may be replaced with configurations of another embodiment or conventionally known configurations. In addition, other configurations may be added to some of the configurations of each embodiment, some of the configurations of each embodiment may be deleted, or some of the configurations of each embodiment may be replaced with other configurations, unless the features thereof are significantly changed.

Reference Signs List

1, 416, 611 control unit
100, 400, 610 vehicle
10, 600 vehicle control device
11, 501 preceding vehicle state prediction unit
12, 502 driving characteristic computation unit
13, 503 driving state estimation unit
101, 401 fuel tank
102, 402 engine
103 generator
104, 403 battery
105 inverter
106 motor
107, 407 traveling device
108, 408 wheel
109, 409 steering device
110, 410 brake actuator
111, 411 accelerator pedal
112, 412 brake pedal
113, 413 steering angle sensor
114, 414 vehicle speed sensor
115, 415 front recognition sensor
201, 421 target driving force computation unit
202 driving force distribution computation unit
203 inverter control unit
204, 424 engine control unit
205, 422 target braking force computation unit
206 brake control unit
207 braking force distribution computation unit
209, 423 driving planning unit
210, 504 driving plan generation unit

301 preceding vehicle
302 own vehicle
404 starter generator
405 clutch
406 transmission
425 clutch control unit
426 brake control unit
431 air cleaner
432 air mass flow sensor (air flow meter)
433 low-pressure EGR valve
434 compressor
435 intercooler
436 throttle valve
437 intake manifold
438 manifold pressure sensor
439 combustion chamber
440 fuel injection valve
441 ignition plug
442 intake valve
443 exhaust valve
445 crank mechanism
446 turbine
447 EGR cooler
448 catalyst converter
601 driver information identification unit
602 driving characteristic parameter storage unit
603 reading device
612 communication module
613 mobile phone network
614 Internet
615 data center
616 storage

## Claims

1. A vehicle control device (10), comprising:

   a driving characteristic computation unit (12) that computes driving characteristic parameters of an own vehicle (100) on the basis of an intervehicle distance between a preceding vehicle and the own vehicle (100);
   a preceding vehicle state prediction unit (11) that predicts a state of the preceding vehicle after a predetermined amount of time on the basis of the intervehicle distance; and
   a driving state estimation unit (13) that estimates a driving state of the own vehicle (100) after the predetermined amount of time on the basis of the state of the preceding vehicle after the predetermined amount of time predicted by the preceding vehicle state prediction unit (11) and the driving characteristic parameters of the own vehicle (100) computed by the driving characteristic computation unit (12),
   **characterized in that** the driving characteristic parameters are calculated using the following formula:

   $$y = \theta_0 + \theta_1 \cdot x_1 + \theta_2 \cdot x_2$$

   ,

   in which y is the driving state of the own vehicle (100), x1 is the intervehicle distance, x2 is a relative speed, and $\theta_0$, $\theta_1$, and $\theta_2$ are driving characteristic parameters of the own vehicle (100),
   wherein

   the own vehicle (100) is a vehicle (100) using an engine (102) as a power source and including a clutch capable of cutting off power transmission of the engine (102) even while the vehicle (100) is traveling,

the vehicle control device (10) further comprises a driving plan generation unit that generates a driving plan of the own vehicle (100) on the basis of the driving state of the own vehicle (100) after the predetermined amount of time estimated by the driving state estimation unit (13), and

when the driving state of the own vehicle (100) after the predetermined amount of time estimated by the driving state estimation unit (13) is a driving state in which the own vehicle (100) decelerates, the power transmission of the engine (102) via the clutch is cut off to cause the own vehicle (100) to travel by coasting,

wherein
the engine (102) is stopped when the driving state of the own vehicle (100) after the predetermined amount of time estimated by the driving state estimation unit (13) is a driving state in which the own vehicle (100) further decelerates,
wherein
the engine (102) is restarted when the driving state of the own vehicle (100) after the predetermined amount of time estimated by the driving state estimation unit (13) is a driving state in which the own vehicle (100) accelerates.

2. The vehicle control device (10) according to claim 1, wherein

the own vehicle (100) is a hybrid electric vehicle including a motor (106), a battery (104), and an engine (102), the vehicle control device (10) further comprises a driving plan generation unit that generates a driving plan of the own vehicle (100) on the basis of the driving state of the own vehicle after the predetermined amount of time estimated by the driving state estimation unit (13), and

when the driving state of the own vehicle (100) after the predetermined amount of time estimated by the driving state estimation unit (13) is a driving state in which the motor (106) is drivable only by the battery (104), an output margin of the battery (104) is reduced and the engine (102) is prohibited from being started.

3. The vehicle control device (10) according to claim 1, wherein

the engine includes an EGR,
the vehicle control device (10) further comprises a driving plan generation unit that generates a driving plan of the own vehicle (100) on the basis of the driving state of the own vehicle (100) after the predetermined amount of time estimated by the driving state estimation unit (13), and

when the driving state of the own vehicle (100) after the predetermined amount of time estimated by the driving state estimation unit (13) is a driving state in which the own vehicle (100) accelerates, an EGR amount of the EGR is reduced.

4. The vehicle control device (10) according to claim 1, wherein

the engine includes a supercharger,
the vehicle control device (10) further comprises a driving plan generation unit that generates a driving plan of the own vehicle (100) on the basis of the driving state of the own vehicle (100) after the predetermined amount of time estimated by the driving state estimation unit (13), and

when the driving state of the own vehicle (100) after the predetermined amount of time estimated by the driving state estimation unit (13) is a driving state in which the own vehicle (100) accelerates, a supercharging pressure of the supercharger is increased.

5. The vehicle control device (10) according to claim 1, wherein

the own vehicle (100) is a vehicle using an engine (102) as a power source and including a generator (103) driven with power from the engine (102),
the vehicle control device (10) further comprises a driving plan generation unit that generates a driving plan of the own vehicle (100) on the basis of the driving state of the vehicle (100) after the predetermined amount of time estimated by the driving state estimation unit (13), and

when the driving state of the own vehicle (100) after the predetermined amount of time estimated by the driving state estimation unit (13) is a driving state in which the own vehicle (100) decelerates, an output of the generator (103) is increased.

6. The vehicle control device (10) according to claim 1, wherein
the driving characteristic computation unit (12) performs a different computation of the driving characteristic parameters when the own vehicle (100) is driven by a driver and when the own vehicle (100) is driven by an automatic driving system.

7. The vehicle control device (10) according to claim 1, further comprising:

a driver information identification unit that identifies a driver and outputs driver identification information; and
a driving characteristic parameter storage unit that records the driving characteristic parameters in association with the driver identification information,
wherein the driving characteristic parameters recorded in the driving characteristic parameter storage unit on the basis of the driver identification information are output to the driving characteristic computation unit (12).

8. The vehicle control device (10) according to claim 7, wherein

the driver information identification unit and the driving characteristic parameter storage unit are provided outside the own vehicle (100), and
the own vehicle (100) communicates with the driver information identification unit and the driving characteristic parameter storage unit via a communication module.

**Patentansprüche**

1. Fahrzeugsteuervorrichtung (10), die Folgendes umfasst:

eine Fahreigenschaft-Berechnungseinheit (12), die auf der Grundlage eines Zwischenfahrzeugabstands zwischen einem vorausfahrenden Fahrzeug und dem eigenen Fahrzeug (100) Fahreigenschaftsparameter eines eigenen Fahrzeugs (100) berechnet;
eine Einheit (11) zur Vorhersage eines Zustands eines vorausfahrenden Fahrzeugs, die auf der Grundlage des Zwischenfahrzeugabstands einen Zustand des vorausfahrenden Fahrzeugs nach einer vorgegebenen Zeitspanne vorhersagt; und
eine Fahrzustand-Schätzeinheit (13), die auf der Grundlage des Zustands des vorausfahrenden Fahrzeugs nach der vorgegebenen Zeitspanne, der durch die Einheit (11) zur Vorhersage eines Zustands eines vorausfahrenden Fahrzeugs vorhergesagt wird, und der Fahreigenschaftsparameter des eigenen Fahrzeugs (100), die durch die Fahreigenschaft-Berechnungseinheit (12) berechnet werden, einen Fahrzustand des eigenen Fahrzeugs (100) nach der vorgegebenen Zeitspanne schätzt,
**dadurch gekennzeichnet, dass** die Fahreigenschaftsparameter unter Verwendung der folgenden Formel berechnet werden:

$$y = \theta_0 + \theta_1 \cdot x_1 + \theta_2 \cdot x_2 \, ,$$

wobei y der Fahrzustand des eigenen Fahrzeugs (100) ist, x1 der Zwischenfahrzeugabstand ist, x2 eine relative Geschwindigkeit ist und θ0, θ1 und θ2 Fahreigenschaftsparameter des eigenen Fahrzeugs (100) sind,
wobei
das eigene Fahrzeug (100) ein Fahrzeug (100) ist, das eine Kraftmaschine (102) als eine Kraftquelle verwendet und eine Kupplung enthält, die die Kraftübertragung der Kraftmaschine (102) selbst während der Fahrt des Fahrzeugs (100) unterbrechen kann,
die Fahrzeugsteuervorrichtung (10) ferner eine Fahrplan-Erzeugungseinheit umfasst, die auf der Grundlage des Fahrzustands des eigenen Fahrzeugs (100) nach der vorgegebenen Zeitspanne, der durch die Fahrzustand-Schätzeinheit (13) geschätzt wird, einen Fahrplan des eigenen Fahrzeugs (100) erzeugt, und
dann, wenn der Fahrzustand des eigenen Fahrzeugs (100) nach der vorgegebenen Zeitspanne, der durch die Fahrzustand-Schätzeinheit (13) geschätzt wird, ein Fahrzustand ist, in dem das eigene Fahrzeug (100) die Fahrt verlangsamt, die Kraftübertragung der Kraftmaschine (102) über die Kupplung abgeschaltet wird, um zu bewirken, dass das eigene Fahrzeug (100) im Leerlauf fährt,
wobei
die Kraftmaschine (102) angehalten wird, wenn der Fahrzustand des eigenen Fahrzeugs (100) nach der vorgegebenen Zeitspanne, der durch die Fahrzustand-Schätzeinheit (13) geschätzt wird, ein Fahrzustand ist, in dem das eigene Fahrzeug (100) die Fahrt weiter verlangsamt,
wobei
die Kraftmaschine (102) erneut gestartet wird, wenn der Fahrzustand des eigenen Fahrzeugs (100) nach der vorgegebenen Zeitspanne, der durch die Fahrzustand-Schätzeinheit (13) geschätzt wird, ein Fahrzustand ist, in dem das eigene Fahrzeug (100) beschleunigt.

2. Fahrzeugsteuervorrichtung (10) nach Anspruch 1, wobei

das eigene Fahrzeug (100) ein Hybridelektrofahrzeug ist, das einen Motor (106), eine Batterie (104) und eine Kraftmaschine (102) enthält,
die Fahrzeugsteuervorrichtung (10) ferner eine Fahrplan-Erzeugungseinheit umfasst, die auf der Grundlage des Fahrzustands des eigenen Fahrzeugs (100) nach der vorgegebenen Zeitspanne, der durch die Fahrzustand-Schätzeinheit (13) geschätzt wird, einen Fahrplan des eigenen Fahrzeugs (100) erzeugt, und
dann, wenn der Fahrzustand des eigenen Fahrzeugs (100) nach der vorgegebenen Zeitspanne, der durch die Fahrzustand-Schätzeinheit (13) geschätzt wird, ein Fahrzustand ist, in dem der Motor (106) lediglich durch die Batterie (104) angetrieben werden kann, ein Ausgangsrandwert der Batterie (104) verringert wird und unterbunden wird, dass die Kraftmaschine (102) gestartet wird.

3. Fahrzeugsteuervorrichtung (10) nach Anspruch 1, wobei

die Kraftmaschine eine Abgasrückführung enthält,
die Fahrzeugsteuervorrichtung (10) ferner eine Fahrplan-Erzeugungseinheit umfasst, die auf der Grundlage des Fahrzustands des eigenen Fahrzeugs (100) nach der vorgegebenen Zeitspanne, der durch die Fahrzustand-Schätzeinheit (13) geschätzt wird, einen Fahrplan des eigenen Fahrzeugs (100) erzeugt, und
dann, wenn der Fahrzustand des eigenen Fahrzeugs (100) nach der vorgegebenen Zeitspanne, der durch die Fahrzustand-Schätzeinheit (13) geschätzt wird, ein Fahrzustand ist, in dem das eigene Fahrzeug (100) beschleunigt, ein Abgasrückführungsbetrag der Abgasrückführung verringert wird.

4. Fahrzeugsteuervorrichtung (10) nach Anspruch 1, wobei

die Kraftmaschine einen Lader enthält,
die Fahrzeugsteuervorrichtung (10) ferner eine Fahrplan-Erzeugungseinheit umfasst, die auf der Grundlage des Fahrzustands des eigenen Fahrzeugs (100) nach der vorgegebenen Zeitspanne, der durch die Fahrzustand-Schätzeinheit (13) geschätzt wird, einen Fahrplan des eigenen Fahrzeugs (100) erzeugt, und
dann, wenn der Fahrzustand des eigenen Fahrzeugs (100) nach der vorgegebenen Zeitspanne, der durch die Fahrzustand-Schätzeinheit (13) geschätzt wird, ein Fahrzustand ist, in dem das eigene Fahrzeug (100) beschleunigt, ein Ladedruck des Laders erhöht wird.

5. Fahrzeugsteuervorrichtung (10) nach Anspruch 1, wobei

das eigene Fahrzeug (100) ein Fahrzeug ist, das eine Kraftmaschine (102) als eine Kraftquelle verwendet und einen Generator (103) enthält, der mit Energie von der Kraftmaschine (102) angetrieben wird,
die Fahrzeugsteuervorrichtung (10) ferner eine Fahrplan-Erzeugungseinheit umfasst, die auf der Grundlage des Fahrzustands des eigenen Fahrzeugs (100) nach der vorgegebenen Zeitspanne, der durch die Fahrzustand-Schätzeinheit (13) geschätzt wird, einen Fahrplan des eigenen Fahrzeugs (100) erzeugt, und
dann, wenn der Fahrzustand des eigenen Fahrzeugs (100) nach der vorgegebenen Zeitspanne, der durch die Fahrzustand-Schätzeinheit (13) geschätzt wird, ein Fahrzustand ist, in dem das eigene Fahrzeug (100) verzögert, ein Ausgang des Generators (103) erhöht wird.

6. Fahrzeugsteuervorrichtung (10) nach Anspruch 1, wobei
die Fahreigenschaft-Berechnungseinheit (12) eine unterschiedliche Berechnung der Fahreigenschaftsparameter durchführt, wenn das eigene Fahrzeug (100) durch einen Fahrer gefahren wird und wenn das eigene Fahrzeug (100) durch ein System zum automatischen Fahren gefahren wird.

7. Fahrzeugsteuervorrichtung (10) nach Anspruch 1, die ferner Folgendes umfasst:

eine Fahrerinformationen-Identifikationseinheit, die einen Fahrer identifiziert und Fahreridentifikationsinformationen ausgibt; und
eine Fahreigenschaftsparameter-Speichereinheit, die die Fahreigenschaftsparameter in Zuordnung zu den Fahreridentifikationsinformationen aufzeichnet,
wobei die Fahreigenschaftsparameter, die auf der Grundlage der Fahreridentifikationsinformationen in der Fahreigenschaftsparameter-Speichereinheit aufgezeichnet sind, an die Fahreigenschaft-Berechnungseinheit (12) ausgegeben werden.

8. Fahrzeugsteuervorrichtung (10) nach Anspruch 7, wobei

die Fahrerinformationen-Identifikationseinheit und die Fahreigenschaftsparameter-Speichereinheit außerhalb des eigenen Fahrzeugs (100) vorgesehen sind, und
das eigene Fahrzeug (100) über ein Kommunikationsmodul mit der Fahrerinformationen-Identifikationseinheit und der Fahreigenschaftsparameter-Speichereinheit kommuniziert.

**Revendications**

1. Dispositif de commande de véhicule (10), comprenant :

une unité de calcul de caractéristiques de conduite (12) qui calcule des paramètres de caractéristiques de conduite d'un propre véhicule (100) sur la base d'une distance inter-véhiculaire entre un véhicule précédent et le propre véhicule (100) ;
une unité de prédiction d'état de véhicule précédent (11) qui prédit un état du véhicule précédent après un laps de temps prédéterminé sur la base de la distance inter-véhiculaire ; et
une unité d'estimation d'état de conduite (13) qui estime un état de conduite du propre véhicule (100) après le laps de temps prédéterminé sur la base de l'état du véhicule précédent après le laps de temps prédéterminé prédit par l'unité de prédiction d'état de véhicule précédent (11) et sur la base des paramètres de caractéristiques de conduite du propre véhicule (100) calculés par l'unité de calcul de caractéristiques de conduite (12),
**caractérisé en ce que** les paramètres de caractéristiques de conduite sont calculés à l'aide de la formule suivante :

$$y = \theta_0 + \theta_1 \cdot x_1 + \theta_2 \cdot x_2 \quad ,$$

dans laquelle y est l'état de conduite du propre véhicule (100), $x_1$ est la distance inter-véhiculaire, $x_2$ est une vitesse relative, et $\theta_0$, $\theta_1$, et $\theta_2$ sont des paramètres de caractéristiques de conduite du propre véhicule (100), dans lequel
le propre véhicule (100) est un véhicule (100) utilisant un moteur (102) à titre de source de puissance et incluant un embrayage capable de couper une transmission de puissance du moteur (102) même si le véhicule (100) est en train de circuler,
le dispositif de commande de véhicule (10) comprend en outre une unité de génération de plan de conduite qui génère un plan de conduite du propre véhicule (100) sur la base de l'état de conduite du propre véhicule (100) après le laps de temps prédéterminé estimé par l'unité d'estimation d'état de conduite (13), et
quand l'état de conduite du propre véhicule (100) après le laps de temps prédéterminé estimé par l'unité d'estimation d'état de conduite (13) est un état de conduite dans lequel le propre véhicule (100) décélère, la transmission de puissance du moteur (102) via l'embrayage est coupée pour amener le propre véhicule (100) à circuler en roue libre,
dans lequel
le moteur (102) est arrêté quand l'état de conduite du propre véhicule (100) après le laps de temps prédéterminé estimé par l'unité d'estimation d'état de conduite (13) est dans un état de conduite dans lequel le propre véhicule (100) continue à décélérer,
dans lequel
le moteur (102) est redémarré quand l'état de conduite du propre véhicule (100) après le laps de temps prédéterminé estimé par l'unité d'estimation d'état de conduite (13) est un état de conduite dans lequel le propre véhicule (100) accélère.

2. Dispositif de commande de véhicule (10) selon la revendication 1, dans lequel

le propre véhicule (100) est un véhicule électrique hybride incluant une motrice (106), une batterie (104), et un moteur (102),
le dispositif de commande de véhicule (10) comprend en outre une unité de génération de plan de conduite qui génère un plan de conduite du propre véhicule (100) sur la base de l'état de conduite du propre véhicule après le laps de temps prédéterminé estimé par l'unité d'estimation d'état de conduite (13), et

quand l'état de conduite du propre véhicule (100) après le laps de temps prédéterminé estimé par l'unité d'estimation d'état de conduite (13) est un état de conduite dans lequel la motrice (106) peut être entraînée uniquement par la batterie (104), une marge de sortie de la batterie (104) est réduite et le moteur (102) est empêché d'être démarré.

3. Dispositif de commande de véhicule (10) selon la revendication 1, dans lequel

le moteur inclut un EGR,

le dispositif de commande de véhicule (10) comprend en outre une unité de génération de plan de conduite qui génère un plan de conduite du propre véhicule (100) sur la base de l'état de conduite du propre véhicule (100) après le laps de temps prédéterminé estimé par l'unité d'estimation d'état de conduite (13), et

quand l'état de conduite du propre véhicule (100) après le laps de temps prédéterminé estimé par l'unité d'estimation d'état de conduite (13) est un état de conduite dans lequel le propre véhicule (100) accélère, une quantité EGR de l'EGR est réduite.

4. Dispositif de commande de véhicule (10) selon la revendication 1, dans lequel

le moteur inclut un compresseur de suralimentation,

le dispositif de commande de véhicule (10) comprend en outre une unité de génération de plan de conduite qui génère un plan de conduite du propre véhicule (100) sur la base de l'état de conduite du propre véhicule après le laps de temps prédéterminé estimé par l'unité d'estimation d'état de conduite (13), et

quand l'état de conduite du propre véhicule (100) après le laps de temps prédéterminé estimé par l'unité d'estimation d'état de conduite (13) est un état de conduite dans lequel le propre véhicule (100) accélère, une pression de suralimentation du compresseur de suralimentation est augmentée.

5. Dispositif de commande de véhicule (10) selon la revendication 1, dans lequel

le propre véhicule (100) est un véhicule utilisant un moteur (102) à titre de source de puissance et incluant un alternateur (103) entraîné par une puissance provenant du moteur (102),

le dispositif de commande de véhicule (10) comprend en outre une unité de génération de plan de conduite qui génère un plan de conduite du propre véhicule (100) sur la base de l'état de conduite du véhicule (100) après le laps de temps prédéterminé estimé par l'unité d'estimation d'état de conduite (13), et

quand l'état de conduite du propre véhicule (100) après le laps de temps prédéterminé estimé par l'unité d'estimation d'état de conduite (13) est un état de conduite dans lequel le propre véhicule (100) décélère, une sortie de l'alternateur (103) est augmentée.

6. Dispositif de commande de véhicule (10) selon la revendication 1, dans lequel
l'unité de calcul de caractéristiques de conduite (12) effectue un calcul différent des paramètres de caractéristiques de conduite quand le propre véhicule (100) est conduit par un conducteur et quand le propre véhicule (100) est conduit par un système de conduite automatique.

7. Dispositif de commande de véhicule (10) selon la revendication 1, comprenant en outre :

une unité d'identification d'informations de conducteur qui identifie un conducteur et sort des informations d'identification de conducteur ; et

une unité de stockage de paramètres de caractéristiques de conduite qui enregistre les paramètres de caractéristiques de conduite en association avec les informations d'identification de conducteur,

dans lequel les paramètres de caractéristiques de conduite enregistrés dans l'unité de stockage de paramètres de caractéristiques de conduite sur la base des informations d'identification de conducteur sont sortis vers l'unité de calcul de caractéristiques de conduite (12).

8. Dispositif de commande de véhicule (10) selon la revendication 7, dans lequel

l'unité d'identification d'informations de conducteur et l'unité de stockage de paramètres de caractéristiques de conduite sont prévues à l'extérieur du propre véhicule (100), et

le propre véhicule (100) communique avec l'unité d'identification d'informations de conducteur et l'unité de stockage de paramètres de caractéristiques de conduite via un module de communication.

# FIG. 1

# FIG. 2

$$v_p(\tau + 1) = v_p(\tau) + \alpha_p(\tau) \cdot d\tau \quad \cdots \text{(FORMULA 2)}$$

PREDICTED VALUE
OF PRECEDING
VEHICLE SPEED

$v_p(\tau_0) \quad \cdots$ (FORMULA 3)

# FIG. 3

START

S1 ACQUIRE (OR CALCULATE) OWN VEHICLE ACCELERATION

S2 IS PRECEDING VEHICLE DETECTED — NO

YES

S3 MEASURE INTERVEHICLE TIME

S4 IS INTERVEHICLE TIME SMALLER THAN $THW_{th}$? — NO

YES

S5 ACQUIRE DATA FOR TRAVELING FOLLOWING PRECEDING VEHICLE
- S5a STORE OWN VEHICLE SPEED IN BUFFER
- S5b STORE INTERVEHICLE DISTANCE IN BUFFER
- S5c STORE RELATIVE SPEED IN BUFFER
- S5d STORE OWN VEHICLE ACCELERATION IN BUFFER

S7 ACQUIRE DATA FOR TRAVELING ALONE
- S7a STORE OWN VEHICLE SPEED IN BUFFER
- S7b STORE OWN VEHICLE ACCELERATION IN BUFFER

S6 CALCULATE DRIVING CHARACTERISTIC PARAMETERS FOR FOLLOWING PRECEDING VEHICLE FROM INFORMATION STORED IN BUFFER

S8 CALCULATE DRIVING CHARACTERISTIC PARAMETERS FOR FOLLOWING PRECEDING VEHICLE FROM INFORMATION STORED IN BUFFER

END

# FIG. 4

PREDICTED VALUE
OF PRECEDING
VEHICLE SPEED

PREDICTED VALUE
OF PRECEDING
VEHICLE POSITION

(a)

(b)

(c)

(d)

# FIG. 5

# FIG. 6A

## FIG. 6B

TIME ($t_a$) →  VIRTUAL TIME ($\tau$)

## FIG. 6C

LARGE ACCELERATION (ACCELERATION)

VIRTUAL TIME ($\tau$)

SMALL ACCELERATION (BRAKING)

## FIG. 7

CONTROL UNIT

FRONT RECOGNITION SENSOR 115

TRAVELING DEVICE 107

MOTOR 106

INVERTER 105

BATTERY 104

GENERATOR 103

ENGINE 102

FUEL TANK 101

# FIG. 8

## FIG. 9

## FIG. 10

# FIG. 11

# FIG. 12

(a)
SPEED [km/h]

(b)
ACCELERATION [m/s²]

(c)
ACCELERATOR PEDAL
OPERATION AMOUNT

TIME [sec.]

(d)
PREDICTION OF
DRIVING FORCE

VIRTUAL TIME
[sec.]

LARGE
(ACCELERATION)

0

SMALL
(DECELERATION)

TIME [sec.]

(e)
DETERMINATION OF EXCESS
OF BATTERY OUTPUT
( PREDICTION OF )
(START OF ENGINE)

VIRTUAL TIME
[sec.]

EXCESS

TIME [sec.]

(f)
ACTUAL ENGINE
START TIMING

START OF ENGINE

TIME [sec.]

## FIG. 13

MOTOR OUTPUT OPERATION POINT
(EXAMPLE: INCLUDING PREDICTION)

DISCHARGED

UPPER LIMIT OF BATTERY OUTPUT

UPPER LIMIT OF BATTERY OUTPUT WITH MARGIN
(COMPARATIVE EXAMPLE)

UPPER LIMIT OF BATTERY OUTPUT WITH MARGIN (EXAMPLE)

SYSTEM OUTPUT

BATTERY
CHARGING RATE

HIGH

CHARGED

TRANSITION OF MOTOR OUTPUT OPERATION POINT
(COMPARATIVE EXAMPLE: INCLUDING NO PREDICTION)

## FIG. 14

TRANSITION OF MOTOR OUTPUT OPERATION POINT
(EXAMPLE: INCLUDING PREDICTION)

DISCHARGED

UPPER LIMIT OF BATTERY OUTPUT

UPPER LIMIT OF BATTERY OUTPUT WITH MARGIN (EXAMPLE)

UPPER LIMIT OF BATTERY OUTPUT WITH MARGIN
(COMPARATIVE EXAMPLE)

SYSTEM OUTPUT

BATTERY
CHARGING RATE

HIGH

TRANSITION OF MOTOR OUTPUT OPERATION POINT
(COMPARATIVE EXAMPLE: INCLUDING NO PREDICTION)

CHARGED

# FIG. 15

UPPER LIMIT OF
BATTERY OUTPUT

UPPER LIMIT OF BATTERY
OUTPUT WITH MARGIN

SPEED
[km/h]

ACCELERATION [G]

UPPER LIMIT OF BATTERY
OUTPUT AFTER CHANGE IN MARGIN

# FIG. 16

# FIG. 17

# FIG. 18

## FIG. 19

## FIG. 20

INTERVEHICLE DISTANCE

RELATIVE SPEED

OWN VEHICLE SPEED

STATE WHERE DRIVER SUPPORTING
FUNCTION IS EXECUTED

ACCELERATOR PEDAL OPERATION AMOUNT

BRAKE PEDAL OPERATION AMOUNT

STATE WHERE TARGET
INTERVEHICLE DISTANCE IS SET

500

501
PRECEDING
VEHICLE STATE
PREDICTION UNIT

503
DRIVING STATE
ESTIMATION UNIT

DRIVING
CHARACTERISTICS
COMPUTATION
UNIT

502

DRIVING STATE
ESTIMATION RESULT

OWN VEHICLE SPEED

SPECIFICATIONS OF VEHICLE

STATE OF TRAVELING DEVICE

OPERATION STATE OF MOTOR

OPERATION STATE OF ENGINE

STATE OF BATTERY

504
DRIVING PLAN
GENERATION
UNIT

EP 4 043 708 B1

# FIG. 21

# FIG. 22

**EP 4 043 708 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018118690 A
- JP 2010143323 A
- EP 0939297 A2
- EP 3147170 A2